# EUROPEAN PATENT APPLICATION

(11) **EP 1 298 563 A1**
(43) Date of publication of application: **02.04.2003**
(21) Application number: 02021743.6
(22) Date of filing: 25.09.2002
(51) Int. Cl.: G06F 17/60

(54) **Vehicle sales support system, vehicle sales support program and vehicle sales support method**

(30) Priority: 28.09.2001 JP 2001303025; 26.07.2002 JP 2002218736
(71) Applicant: Mazda Motor Corporation, Aki-gun, Hiroshima 730-8670 (JP)
(72) Inventor: Takaoka, Hiroki, Aki-gun, Hiroshima 730-8670 (JP)
(74) Representative: Müller-Boré & Partner Patentanwälte

(57) **Abstract**

In providing an estimated price of a vehicle to a customer online, an access history information database for storing access history information of accesses made by each customer for specification selection and/or estimate request regarding a vehicle is previously prepared. When a vehicle distributor inputs an estimated price in response to an estimate request from a customer, the access history information of the customer having made the estimate request read from the access history information database and/or information introducible from the access history information is presented to the distributor.

## Description

### BACKGROUND OF THE INVENTION

The present invention relates to a vehicle sales support system for supporting vehicle sales to customers online by allowing a customer to select, via communications lines, preferred specifications from a plurality of optional specifications previously set with respect to a vehicle and sending an estimated price of a selectively specified or configured vehicle having the preferred specifications in response to an estimate request from the customer, and a vehicle sales support program for controlling a vehicle sales support apparatus used in the vehicle sales support system, and a vehicle sales support method.

In a conventionally known vehicle sales support system, as described in, for example, Japanese Laid-Open Patent Publication No. 5-274326, catalogue information on vehicles computerized in the form of multimedia information is previously stored, and if a vehicle has various optional specifications such as a color, a design and optional equipment, a customer selects preferred specifications and equipment by selecting menu items, so that the appearance of the vehicle having the selected preferred specifications (hereinafter referred to as the selectively specified or configured vehicle) can be visualized for providing purchase support information to the customer.

Also, a system in which price estimate, inquiry about delivery time, order receipt and the like regarding the selectively specified or configured vehicle can be performed online is known.

In the current sales form (namely, the sales form in which an estimated price is not presented online), there are a plurality of distributors such as vehicle sales companies, their shops and dealers. In each of the distributors, when a customer requests for an estimate of the price of a selectively specified or configured vehicle, the distributor itself determines a reduction in price from a manufacturer recommended retail price of the selectively specified or configured vehicle (which may be a reduction in whole price including the price of a trade-in or expenses necessary for the purchase of the vehicle), so as to set the estimated price of the selectively specified or configured vehicle, which is presented to the customer.

Therefore, also in the sales support system for presenting an estimated price to a customer online, after the customer selects the optional specifications of a vehicle that is to be purchased, he/she selects a distributor by which an estimated price of the selectively specified or configured vehicle is desired to be presented and requests for the estimated price of the selected distributor. In this case, in response to the estimate request made by the customer, the distributor selected by the customer may be allowed to input an estimated price so that the input estimated price can be sent to the customer.

However, in such a method for presenting an estimated price online, a customer can easily get the estimated price set by a preferred distributor without visiting the distributor and the estimated price can be presented before entering into negotiations. Therefore, the customer tends to request for an estimated price of the same selectively specified or configured vehicle of a plurality of distributors, so as to exclude distributors having presented estimated prices much higher than the preferred purchase price of the customer and to enter into negotiations for the purchase of the selectively specified or configured vehicle with one of the other distributors (which have presented estimated prices not largely exceeding the preferred purchase price).

In this manner, in the sales support system in which an estimated price is presented online before negotiations, in order to make a customer consider entering into negotiations with a distributor, it seems very significant what estimated price the distributor sets with respect to a selectively specified or configured vehicle selected by the customer.

In the case where an estimated price is presented online at the request for an estimate before negotiations, the distributor cannot grasp what estimated price is preferred , by the customer. Therefore, even when the distributor sets an estimated price with the intention to satisfy every customer, the set estimated price can possibly be much higher than the preferred purchase price of the customer. If the estimated price is thus high, there arises a problem that the customer may not give an opportunity of negotiations to the distributor.

In other words, in the sales form in which an estimated price is not presented online, since a customer visit a distributor for negotiations and the distributor can get various information during the negotiations, the distributor can recognize the preferred purchase price of the customer so as to present an estimated price according to the preference of the customer. Also, even after presenting the estimated price once, if the presented estimated price is found to be not preferred by the customer, the distributor can continue the negotiations by presenting a new estimated price.

On the contrary, in the sales method in which an estimated price is presented online, the distributor cannot help presenting the same estimated price to all customers because the distributor has no information based on which the preferred purchase price of each customer can be presumed. Therefore, there is high possibility that an estimated price appropriate in view of the preferred purchase price of a customer (namely, an estimated price not too high from the viewpoint of the customer) cannot be presented.

Also, in the method for presenting an estimated price online, although a large number of customers have rather weak intention for the purchase of selectively specified or configured vehicles, it is a great loss for the distributor to lose an opportunity of negotiations with a customer having comparatively strong intention for the purchase. The distributor, however, cannot grasp the degree of purchase intention of the customer at all, and hence cannot help presenting the same estimated price regardless of the degree of purchase intention of the customer. In other words, the distributor cannot present a low estimated price to a customer having comparatively strong purchase intention, and hence, the opportunity of negotiations with the customer may be highly possibly lost.

On the other hand, a customer may be allowed to input a preferred purchase price and the degree of purchase intention so that a distributor can input an estimated price on the basis of the input preferred purchase price and degree of purchase intention, and the thus input estimated price can be presented to the customer.

However, even if the preferred purchase price and the degree of purchase intention are thus input, customers tend to set a rather low preferred purchase price and a rather high degree of purchase intention in order to purchase a vehicle at a price as low as possible. Therefore, the information input by a customer cannot be effective for setting an appropriate estimated price (that is, an estimated price not largely exceeding the preferred purchase price on the customer's mind or an estimated price according to the degree of purchase intention of the customer).

The present invention was devised in consideration of the aforementioned problems. An object of the invention is, in a sales support or configuration system for supporting vehicle sales to customers or vehicle configuration by customers online by presenting an estimated price to the customers, when a distributor sets an estimated price of a selectively specified or configured vehicle selected by a customer, allowing the distributor to easily set an appropriate estimated price (i.e., an estimated price not largely exceeding a preferred purchase price of the customer or an estimated price according to the degree of purchase intention of the customer) without relying upon information such as a preferred purchase price and a degree of purchase intention input by the customer.

### SUMMARY OF THE INVENTION

In order to achieve the object, according to this invention, access history information of accesses made online by each customer for vehicle specification selection and/or an estimate request is stored, so that, when a distributor selected by a customer having made an estimate request inputs an estimated price, the stored access history information of the customer having made the estimated request or information introducible from the access history information can be presented to the selected distributor.

Specifically, the the invention is directed to a vehicle sales support or configuration system for supporting vehicle sales to customers or vehicle configuration by customers online by allowing a customer to select, via communications lines, preferred specifications or configurations from a plurality of specifications or configurations previously set with respect to a vehicle and sending an estimated price of a selectively specified or configured vehicle having the preferred specifications to the customer in response to an estimate request from the customer.

The vehicle sales support system includes a manufacturer recommended retail price database for storing data for enabling calculation of manufacturer recommended retail prices of vehicles having the plurality of specifications or configurations; an access history information database for storing access history information of accesses made online by each customer for specification or configuration selection and/or estimate request regarding the vehicle; specification or configuration selection means for presenting the plurality of specifications or configurations of the vehicle to the customer, allowing the customer to select the preferred specifications or configurations from the plurality of specifications or configurations, calculating a manufacturer recommended retail price of the selectively specified or configured vehicle on the basis of the data stored in the manufacturer recommended retail price database and presenting the calculated manufacturer recommended retail price to the customer; distributor selection means for presenting a plurality of distributors to the customer and allowing the customer to select, from the plurality of distributors, a distributor by which an estimated price of the selectively specified or configured vehicle is desired to be presented; estimated price setting means, used when an estimate request regarding the selectively specified or configured vehicle is received from the customer, for presenting, to the selected distributor, the preferred specifications or configurations and the manufacturer recommended retail price of the selectively specified or configured vehicle calculated on the basis of the data stored in the manufacturer recommended retail price database, and allowing the selected distributor to input an estimated price of the selectively specified or configured vehicle; estimated price submit means for sending the estimated price input by the selected distributor to the customer having made the estimate request; and access history information providing means, used when the selected distributor inputs the estimated price, for presenting, to the selected distributor, the access history information of the customer having made the estimate request read from the access history information database and/or information introducible from the access history information.

Accordingly, when a customer selects preferred specifications or configurations, a manufacturer recommended retail price of a selectively specified or configured vehicle having the preferred specifications or configurations is (preferably automatically) presented to the customer. When the customer selects a distributor by which an estimated price of the selectively specified or configured vehicle is desired to be presented and makes an estimate request, the preferred specifications or configurations and the manufacturer recommended retail price of the selectively specified or configured vehicle are presented to the distributor selected by the customer. After the selected distributor inputs an estimated price of the selectively specified or configured vehicle, the input estimated price is sent to the customer having made the estimate request. When the selected distributor inputs the estimated price, access history information of the customer having made the estimate request is read from the access history information database, and the access history information and/or information introducible from the access history information is presented to the selected distributor.

Since the access history information of the customer and the information introducible from the access history information are presented to the distributor in inputting the estimated price in response to the estimate request from the customer, the selected distributor can presume a preferred purchase price and a degree of purchase intention of the customer on the basis of specification selection history and the like of the access history information. Therefore, the distributor can easily set an appropriate estimated price, namely, an estimated price not largely exceeding the preferred purchase price of the customer or an estimated price according to the degree of purchase intention of the customer. If an improper estimated price (namely, an estimated price largely exceeding the preferably purchase price of the customer) is presented online before negotiations, the customer tends to avoid purchasing the vehicle from the selected distributor having presented this improper estimated price and enter into negotiations with another distributor without giving an opportunity of negotiations to the selected distributor. However, when an appropriate estimated price is presented in the aforementioned manner, the opportunity of negotiations is minimally lost against the intention of the selected distributor. Accordingly, the overall effectiveness of the system is improved.

According to a preferred embodiment of the invention, the access history information database stores specification selection history of each customer, and when the selected distributor inputs the estimated price, the access history information providing means presents, to the selected distributor, the specification selection history of the customer having made the estimate request read from the access history information database.

Although it is difficult to presume the preferred purchase price of the customer on the basis of the preferred specifications or configurations selected by the customer having made the estimate request, the preferred purchase price potentially present in the mind of the customer can be glimpsed in specifications or configurations added, changed or removed during the specification or configuration selection made by the customer. As a result, the selected distributor can easily set an appropriate estimated price not largely exceeding the preferred purchase price of the customer, so as to minimize the loss of the opportunity of negotiations against the intention of the distributor. Also, the customer can get an estimated price close to the preferred purchase price.

Preferably, the specification selection means allows, for selection of the preferred specifications, the customer to select a preferred choice from a plurality of choices set with respect to each of a plurality of items, and when the selected distributor inputs the estimated price, the access history information providing means extracts a choice of each of the plurality of items of which selection has been cancelled by the customer as a result of a plurality of selection or configuration changes from the specification selection history of the customer having made the estimate request read from the access history information database, and presents the extracted choice to the selected distributor.

Thus, the selected distributor can presume that, if a specification or configuration corresponding to the choice cancelled by the customer is comparatively expensive, the customer could not help canceling the choice in consideration of his/her preferred purchase price although he/she is interested in the choice. As a result, the distributor can easily set an appropriate estimated price on the basis of the cancelled choice.

Preferably, the vehicle sales support or configuration system further includes message input means for enabling the selected distributor to input a message when the selected distributor inputs the estimated price, and when the selected distributor inputs a message, the estimated price submit means sends the message to the customer having made the estimate request in addition to the estimated price.

Thus, the selected distributor can set an appropriate estimated price in consideration of the cancelled choice and can input a message that a specification corresponding to the cancelled choice is offered free. Accordingly, the distributor can present the estimated price including the preferable message to the customer, so that the customer can be easily introduced into negotiations.

Preferably, the specification selection means allows, for selection of the preferred specifications or configurations, the customer to select a preferred choice from a plurality of choices set with respect to each of a plurality of items, and when the selected distributor inputs the estimated price, the access history information providing means extracts a choice of each of the plurality of items ultimately selected by the customer as a result of a selection change from the specification or configuration selection history of the customer having made the estimate request read from the access history information database, and presents the extracted choice to the selected distributor.

Thus, the selected distributor can presume that, if a specification or configuration corresponding to the ultimately selected choice is rather inexpensive, the customer prefers an inexpensive vehicle. Accordingly, the distributor can easily set an appropriate estimated price on the basis of the ultimately selected choice.

Further preferably, the specification selection means allows, for selection of the preferred specifications, the customer to select a preferred choice from a plurality of choices set with respect to each of a plurality of items, and when the selected distributor inputs the estimated price, the access history information providing means extracts a choice of each of the plurality of items on selection or configuration of which the customer has spent time longer than a given time from the specification selection history of the customer having made the estimate request read from the access history information database, and presents the extracted choice to the selected distributor.

Thus, the selected distributor can find the choice selected by the customer after hesitation, and can presume that, if a specification corresponding to the selected choice is rather inexpensive, the customer prefers an inexpensive vehicle. Accordingly, the distributor can easily set an appropriate estimated price on the basis of the choice selected after considering for a long time.

Further preferably, the specification selection means allows, for selection of the preferred specifications, the customer to select a preferred choice from a plurality of choices set with respect to each of a plurality of items, and when the selected distributor inputs the estimated price, the access history information providing means calculates, on the basis of the specification selection history of the customer having made the estimate request read from the access history information database, a number of times of selecting the preferred choice selected in each of the plurality of items by the customer during all specification selections made by the customer, and presents, to the selected distributor, the number of times of selecting the preferred choice.

Thus, the selected distributor can find what type of selection intention the customer has, and can set an appropriate estimated price on the basis of the finding.

According to a further preferred embodiment, when the selected distributor inputs the estimated price, the access history information providing means calculates a degree of purchase intention of the customer having made the estimate request for the selectively specified or configured vehicle related to the estimate request on the basis of the access history information of the customer read from the access history information database, and presents the degree of purchase intention to the selected distributor.

In this embodiment, the degree of purchase intention of the customer for the selectively specified or configured vehicle is calculated on the basis of the access history information of the customer. (For example, in the case where the image of the selectively specified or configured vehicle selected by the customer can be enlarged for display or downloaded, the degree of purchase intention is regarded to be high if the customer has performed such operations.) The degree of purchase intention is thus presented to the selected distributor, and hence, the selected distributor can more easily set an estimated price according to the degree of purchase intention of the customer. As a result, the opportunity of negotiations with the customer having a high degree of purchase intention is minimally lost from the selected distributor, and the customer can get a satisfactory estimated price.

Preferably, when the selected distributor inputs the estimated price, the access history information providing means calculates, on the basis of the access history information of the customer having made the estimate request read from the access history information database, a number of estimate requests made by the customer within a given period, and presents the number of estimate requests to the selected distributor.

Thus, the selected distributor can presume that a customer having made a rather large number of estimate requests may hesitate to purchase the vehicle because the estimated prices are higher than his/her preferred purchase price. Therefore, the distributor can easily set an appropriate estimated price in consideration of the number of estimate requests.

Further preferably, the access history information database stores specification selection history of each customer, and when the selected distributor inputs the estimated price, the access history information providing means calculates, on the basis of the specification selection history of the customer having made the estimate request read from the access history information database, a presumed purchase price at which the customer is presumed to purchase the selectively specified or configured vehicle related to the estimate request, and presents the presumed purchase price to the selected distributor.

Thus, the selected distributor can automatically get the presumed purchase price close to the preferred purchase price of the customer, and when the estimated price is set to be close to the presumed purchase price, the estimated price never largely exceeds the preferred purchase price of the customer. The presumed purchase price is calculated, for example, by performing predetermined reduction correction on a predetermined standard estimated price when the customer has made a plurality of selection changes or when the customer has spent time longer than a predetermined time on the selection.

Still further preferably, the access history information database stores manufacturer recommended retail prices of all selectively specified or configured vehicles selected by and having been presented to each customer by the specification selection means with the order of presentation discriminable, and when the selected distributor inputs the estimated price, the access history information providing means presents, to the selected distributor, the manufacturer recommended retail prices of all the selectively specified or configured vehicles presented to the customer having made the estimate request read from the access history information database with the order of presentation discriminable.

If the customer having made the estimate request has selected a plurality of selectively specified or configured vehicles respectively having different specifications, the selected distributor can find the changes of the manufacturer recommended retail prices of the respective selectively specified or configured vehicles, and hence can presume up to what price can be allowed by the customer. Specifically, if a customer judges, on the basis of the manufacturer recommended retail price, that an estimated price of the selectively specified or configured vehicle will exceed his/her preferred purchase price, the customer selects preferred specifications next so as to make the manufacturer recommended retail price lower than the previous one. Therefore, when the selected distributor sees the manufacturer recommended retail prices in time series, the distributor can presume what preferred purchase price the customer has. As a result, the distributor can present an appropriate estimated price to the customer.

Still further preferably, the vehicle sales support or configuration system further includes an estimated price database for storing estimated prices of vehicles having the plurality of specifications set by each of the plurality of distributors, and when the estimate request for the selectively specified or configured vehicle selected by the customer is received from the customer, the estimated price setting means presents, to the selected distributor, the preferred specifications, the manufacturer recommended retail price of the selectively specified or configured vehicle and an estimated price of the selectively specified or configured vehicle, set by the selected distributor, read from the estimated price database.

Thus, the selected distributor can refer to a previously set estimated price stored in the estimated price database in setting the estimated price, and hence, the distributor can more easily set an estimated price of the selectively specified or configured vehicle.

Most preferably, the specification selection means presents, to the customer, in addition to the manufacturer recommended retail price of the selectively specified or configured vehicle selected by the customer, an image, for enlarged display or download, of the selectively specified or configured vehicle, and when the selected distributor inputs the estimated price, the access history information providing means retrieves, from the access history information of the customer having made the estimate request read from the access history information database, the presence or absence of the enlarged display or download of the image of the selectively specified or configured vehicle related to the estimate request, and presents, to the selected distributor, the presence or absence of the enlarged display or download.

Thus, when the image of the selectively specified or configured vehicle has been enlarged for display or downloaded by the customer, the selected distributor can judge that the customer has a rather high degree of purchase intention. If a low estimated price is presented in such a case, an opportunity of negotiations with the customer having a high degree of purchase intention can be minimally lost against the intention of the distributor.

According to a further preferred embodiment, the vehicle sales support or configuration system further includes list display window submit means for sending, in response to a request from the customer to which the estimated price has been sent, a list display window for displaying a list of estimated prices of all selectively specified or configured vehicles selected by the customer, and when the selected distributor inputs the estimated price, the access history information providing means calculates, on the basis of the access history information of the customer having made the estimate request read from the access history information database, a number of times of browsing the list display window by the customer within a given period, and presents the number of browsing times to the selected distributor.

Thus, the selected distributor can judge that the customer has a rather high degree of purchase intention if the number of times of browsing the list display window is comparatively large. When a low estimated price is presented in such a case, an opportunity of negotiations with the customer having a high degree of purchase intention can be minimally lost against the intention of the distributor.

The invention is further directed to a vehicle sales support or configuration program for controlling a vehicle sales support or configuration apparatus for supporting vehicle sales to customers or vehicle configuration by customers online by allowing a customer to select, via communications lines, preferred specifications or configurations from a plurality of specifications or configurations previously set with respect to a vehicle and sending an estimated price of a selectively specified or configured vehicle having the preferred specifications or configurations to the customer in response to an estimate request from the customer.

The vehicle sales support or configuration apparatus includes a manufacturer recommended retail price database for storing data for enabling calculation of manufacturer recommended retail prices of vehicles having the plurality of specifications or configurations; and an access history information database for storing access history information of accesses made online by each customer for specification or configuration selection and/or estimate request regarding the vehicle.

The vehicle sales support program makes the vehicle sales support apparatus execute a specification or configuration selection processing for presenting the plurality of specifications or configurations of the vehicle to the customer, allowing the customer to select the preferred specifications or configurations from the plurality of specifications or configurations, calculating a manufacturer recommended retail price of the selectively specified or configured vehicle on the basis of the data stored in the manufacturer recommended retail price database and presenting the calculated manufacturer recommended retail price to the customer; a distributor selection processing for presenting a plurality of distributors to the customer and allowing the customer to select, from the plurality of distributors, a distributor by which an estimated price of the selectively specified or configured vehicle is desired to be presented; an estimated price setting processing, performed when an estimate request regarding the selectively specified or configured vehicle is received from the customer, for presenting, to the selected distributor, the preferred specifications or configurations and the manufacturer recommended retail price of the selectively specified or configured vehicle calculated on the basis of the data stored in the manufacturer recommended retail price database, and allowing the selected distributor to input an estimated price of the selectively specified or configured vehicle; an estimated price submit processing for sending the estimated price input by the selected distributor to the customer having made the estimate request; and an access history information providing processing, performed when the selected distributor inputs the estimated price, for presenting, to the selected distributor, the access history information of the customer having made the estimate request read from the access history information database and/or information introducible from the access history information.

According to a preferred embodiment of the invention, the access history information database stores specification or configuration selection history of each customer, and in the access history information providing processing, when the selected distributor inputs the estimated price, the specification or configuration selection history of the customer having made the estimate request read from the access history information database is presented to the selected distributor.

Preferably, in the specification selection processing, the customer is allowed, for selection of the preferred specifications, to select a preferred choice from a plurality of choices set with respect to each of a plurality of items, and in the access history information providing processing, when the selected distributor inputs the estimated price, a choice of each of the plurality of items of which selection has been cancelled by the customer as a result of a plurality of selection changes is extracted from the specification selection history of the customer having made the estimate request read from the access history information database, and the extracted choice is presented to the selected distributor.

Further preferably, in the specification or configuration selection processing, the customer is allowed, for selection of the preferred specifications or configurations, to select a preferred choice from a plurality of choices set with respect to each of a plurality of items, and in the access history information providing processing, when the selected distributor inputs the estimated price, a choice of each of the plurality of items ultimately selected by the customer as a result of a selection change is extracted from the specification selection history of the customer having made the estimate request read from the access history information database, and the extracted choice is presented to the selected distributor.

Further preferably, in the specification or configuration selection processing, the customer is allowed, for selection of the preferred specifications or configurations, to select a preferred choice from a plurality of choices set with respect to each of a plurality of items, and in the access history information providing processing, when the selected distributor inputs the estimated price, a choice of each of the plurality of items on selection of which the customer has spent time longer than a given time is extracted from the specification or configuration selection history of the customer having made the estimate request read from the access history information database, and the extracted choice is presented to the selected distributor.

Still further preferably, in the specification or configuration selection processing, the customer is allowed, for selection of the preferred specifications or configurations, to select a preferred choice from a plurality of choices set with respect to each of a plurality of items, and in the access history information providing processing, when the selected distributor inputs the estimated price, a number of times of selecting the preferred choice selected in each of the plurality of items by the customer during all specification selections or configuration made by the customer is calculated on the basis of the specification or configuration selection history of the customer having made the estimate request read from the access history information database, and the number of times of selecting the preferred choice is presented to the selected distributor.

Most preferably, in the access history information providing processing, when the selected distributor inputs the estimated price, a degree of purchase intention of the customer having made the estimate request for the selectively specified or configured vehicle related to the estimate request is calculated on the basis of the access history information of the customer read from the access history information database, and the degree of purchase intention is presented to the selected distributor.

According to a further preferred embodiment, in the access history information providing processing, when the selected distributor inputs the estimated price, a number of estimate requests made by the customer within a given period is calculated on the basis of the access history information of the customer having made the estimate request read from the access history information database, and the number of estimate requests is presented to the selected distributor.

Preferably, the access history information database stores specification selection history of each customer, and in the access history information providing processing, when the selected distributor inputs the estimated price, a presumed purchase price at which the customer is presumed to purchase the selectively specified or configured vehicle related to the estimate request is calculated on the basis of the specification or configuration selection history of the customer having made the estimate request read from the access history information database, and the presumed purchase price is presented to the selected distributor.

Further preferably, the access history information database stores manufacturer recommended retail prices of all selectively specified or configured vehicles selected by and having been presented to each customer by the specification or configuration selection processing with the order of presentation discriminable, and in the access history information providing processing, when the selected distributor inputs the estimated price, the manufacturer recommended retail prices of all the selectively specified or configured vehicles presented to the customer having made the estimate request read from the access history information database are presented to the selected distributor with the order of presentation discriminable.

Most preferably, the vehicle sales support or configuration program further includes an estimated price database for storing estimated prices of vehicles having the plurality of specifications or configurations set by each of the plurality of distributors, and in the estimated price setting processing, when the estimate request for the selectively specified or configured vehicle selected by the customer is received from the customer, the preferred specifications or configurations, the manufacturer recommended retail price of the selectively specified or configured vehicle and an estimated price of the selectively specified or configured vehicle, set by the selected distributor, read from the estimated price database are presented to the selected distributor.

According to a further preferred embodiment, in the specification or configuration selection processing, in addition to the manufacturer recommended retail price of the selectively specified or configured vehicle selected by the customer, an image, for enlarged display or download, of the selectively specified or configured vehicle is presented to the customer, and in the access history information providing processing, when the selected distributor inputs the estimated price, the presence or absence of the enlarged display or download of the image of the selectively specified or configured vehicle related to the estimate request is retrieved from the access history information of the customer having made the estimate request read from the access history information database, and the presence or absence of the enlarged display or download is presented to the selected distributor.

Preferably, the vehicle sales support apparatus is made to further execute a list display window submit processing for sending, in response to a request from the customer to which the estimated price has been sent, a list display window for displaying a list of estimated prices of all selectively specified or configured vehicles selected by the customer, and in the access history information providing processing, when the selected distributor inputs the estimated price, a number of times of browsing the list display window by the customer within a given period is calculated on the basis of the access history information of the customer having made the estimate request read from the access history information database, and the number of browsing times is presented to the selected distributor.

The invention is further directed to a vehicle sales support or configuration method for supporting vehicle sales to customers or vehicle configuration by customers online by allowing a customer to select, via communications lines, preferred specifications or configurations from a plurality of specifications or configurations previously set with respect to a vehicle and sending an estimated price of a selectively specified or configured vehicle having the preferred specifications or configurations to the customer in response to an estimate request from the customer.

In this embodiment, a manufacturer recommended retail price database for storing data for enabling calculation of manufacturer recommended retail prices of vehicles having the plurality of specifications or configurations, and an access history information database for storing access history information of accesses made online by each customer for specification or configuration selection and/or estimate request regarding the vehicle are previously prepared.

The vehicle sales support or configuration method includes a specification or configuration selection step of presenting the plurality of specifications or configurations of the vehicle to the customer, allowing the customer to select the preferred specifications or configurations from the plurality of specifications or configurations, calculating a manufacturer recommended retail price of the selectively specified or configured vehicle on the basis of the data stored in the manufacturer recommended retail price database and presenting the calculated manufacturer recommended retail price to the customer; a distributor selection step of presenting a plurality of distributors to the customer and allowing the customer to select, from the plurality of distributors, a distributor by which an estimated price of the selectively specified or configured vehicle is desired to be presented; an estimated price setting step, performed when an estimate request regarding the selectively specified or configured vehicle is received from the customer, of presenting, to the selected distributor, the preferred specifications or configurations and the manufacturer recommended retail price of the selectively specified or configured vehicle calculated on the basis of the data stored in the manufacturer recommended retail price database, and allowing the selected distributor to input an estimated price of the selectively specified or configured vehicle; an estimated price submit step of sending the estimated price input by the selected distributor to the customer having made the estimate request; and an access history information providing step, performed when the selected distributor inputs the estimated price, of presenting, to the selected distributor, the access history information of the customer having made the estimate request read from the access history information database and/or information introducible from the access history information.

Preferably, the access history information database stores specification or configuration selection history of each customer, and in the access history information providing step, when the selected distributor inputs the estimated price, the specification or configuration selection history of the customer having made the estimate request read from the access history information database is presented to the selected distributor.

Further preferably, in the specification selection step, the customer is allowed, for selection of the preferred specification or configuration, to select a preferred choice from a plurality of choices set with respect to each of a plurality of items, and in the access history information providing step, when the selected distributor inputs the estimated price, a choice of each of the plurality of items of which selection has been cancelled by the customer as a result of a plurality of selection changes is extracted from the specification or configuration selection history of the customer having made the estimate request read from the access history information database, and the extracted choice is presented to the selected distributor.

Further preferably, in the specification or configuration selection step, the customer is allowed, for selection of the preferred specifications or configurations, to select a preferred choice from a plurality of choices set with respect to each of a plurality of items, and in the access history information providing step, when the selected distributor inputs the estimated price, a choice of each of the plurality of items ultimately selected by the customer as a result of a selection change is extracted from the specification or configuration selection history of the customer having made the estimate request read from the access history information database, and the extracted choice is presented to the selected distributor.

Most preferably, in the specification selection step, the customer is allowed, for selection of the preferred specifications or configurations, to select a preferred choice from a plurality of choices set with respect to each of a plurality of items, and in the access history information providing step, when the selected distributor inputs the estimated price, a choice of each of the plurality of items on selection of which the customer has spent time longer than a given time is extracted from the specification selection history of the customer having made the estimate request read from the access history information database, and the extracted choice is presented to the selected distributor.

According to a further preferred embodiment, in the specification selection step, the customer is allowed, in selection of the preferred specification or configuration, to select a preferred choice from a plurality of choices set with respect to each of a plurality of items, and in the access history information providing step, when the selected distributor inputs the estimated price, a number of times of selecting the preferred choice selected in each of the plurality of items by the customer during all specification or configuration selections made by the customer is calculated on the basis of the specification or configuration selection history of the customer having made the estimate request read from the access history information database, and the number of times of selecting the preferred choice is presented to the selected distributor.

Thus, the same effect as that attained by the 7th aspect can be attained.

According to the 34th aspect, in the vehicle sales support method of the 28th aspect, in the access history information providing step, when the selected distributor inputs the estimated price, a degree of purchase intention of the customer having made the estimate request for the selectively specified or configured vehicle related to the estimate request is calculated on the basis of the access history information of the customer read from the access history information database, and the degree of purchase intention is presented to the selected distributor.

Thus, the same effect as that attained by the 8th aspect can be attained.

According to the 35th aspect, in the vehicle sales support method of the 28th aspect, in the access history information providing step, when the selected distributor inputs the estimated price, a number of estimate requests made by the customer within a given period is calculated on the basis of the access history information of the customer having made the estimate request read from the access history information database, and the number of estimate requests is presented to the selected distributor.

Preferably, the access history information database stores specification selection history of each customer, and in the access history information providing step, when the selected distributor inputs the estimated price, a presumed purchase price at which the customer is presumed to purchase the selectively specified or configured vehicle related to the estimate request is calculated on the basis of the specification selection history of the customer having made the estimate request read from the access history information database, and the presumed purchase price is presented to the selected distributor.

Most preferably, the access history information database stores manufacturer recommended retail prices of all selectively specified or configured vehicles selected by and having been presented to each customer in the specification selection step with the order of presentation discriminable, and in the access history information providing step, when the selected distributor inputs the estimated price, the manufacturer recommended retail prices of all the selectively specified or configured vehicles presented to the customer having made the estimate request read from the access history information database are presented to the selected distributor with the order of presentation discriminable.

According to a further preferred embodiment, an estimated price database for storing estimated prices of vehicles having the plurality of specifications set by each of the plurality of distributors is previous prepared in addition to the manufacturer recommended retail price database and the access history information database, and in the estimated price setting step, when the estimate request for the selectively specified or configured vehicle selected by the customer is received from the customer, the preferred specifications, the manufacturer recommended retail price of the selectively specified or configured vehicle and an estimated price of the selectively specified or configured vehicle, set by the selected distributor, read from the estimated price database are presented to the selected distributor.

Preferably, in the specification or configuration selection step, in addition to the manufacturer recommended retail price of the selectively specified or configured vehicle selected by the customer, an image, for enlarged display or download, of the selectively specified or configured vehicle is presented to the customer, and in the access history information providing step, when the selected distributor inputs the estimated price, the presence or absence of the enlarged display or download of the image of the selectively specified or configured vehicle related to the estimate request is retrieved from the access history information of the customer having made the estimate request read from the access history information database, and the presence or absence of the enlarged display or download is presented to the selected distributor.

Further preferably, the vehicle sales support or configuration method further includes a list display window submit step of sending, in response to a request from the customer to which the estimated price has been sent, a list display window for displaying a list of estimated prices of all selectively specified or configured vehicles selected by the customer, and in the access history information providing step, when the selected distributor inputs the estimated price, a number of times of browsing the list display window by the customer within a given period is calculated on the basis of the access history information of the customer having made the estimate request read from the access history information database, and the number of browsing times is presented to the selected distributor.

### BRIEF DESCRIPTION OF THE DRAWINGS

FIG. **1** is a conceptual diagram for showing the whole structure of a customized vehicle estimate/order or configuration system according to an embodiment of the invention;
FIG. **2** is a block diagram for showing an exemplified internal structure of a manufacturer server, a dealer server, a dealer terminal or a user terminal;
FIG. **3** is a diagram for showing a functional architecture of processing modules executed in the customized vehicle estimate/order or configuration system;
FIG. **4** is a diagram for showing transition of display windows in initial processing (M1) and vehicle specification or configuration selection processing (M2);
FIG. **5** is a diagram for showing transition of display windows in estimate/assessment request processing (M3) and an e-mail sending function involved in estimate/assessment request;
FIG. **6** is a diagram for showing transition of display windows in estimate items confirmation processing (M4);
FIG. **7** is a diagram for showing transition of display windows in negotiation application processing (M5) and an e-mail sending function involved in negotiation application;
FIG. **8** is a flowchart for showing entire rough procedures executed by the manufacturer server;
FIG. **9** is a flowchart of the vehicle specification selection or configuration processing (M2) executed by the manufacturer server;
FIG. **10** is a flowchart of the estimate/assessment request processing (M3) executed by the manufacturer server;
FIG. **11** is a flowchart of the estimate items confirmation processing (M4) executed by the manufacturer server;
FIG. **12** is a diagram of an exemplified top window **A-1** corresponding to a homepage window;
FIG. **13** is a diagram of an exemplified home window **A-2**;
FIG. **14** is a diagram of an exemplified format of vehicle specification or configuration selection windows (**B-1** through **B-15**) displayed in the vehicle specification selection processing (M2);
FIG. **15** is a diagram of an exemplified window of details of a manufacturer recommended retail price displayed when a "detail" button of FIG. **14** is operated;
FIG. **16** is a diagram of an exemplified selected specification or configuration display window **B-15** displayed in the vehicle specification or configuration selection processing (M2);
FIG. **17** is a diagram of an exemplified estimate request top window **C-1**;
FIG. **18** is a diagram of an exemplified assessment request input window **C-2**;
FIG. **19** is a diagram of an exemplified ID/password input window **D-1**;
FIG. **20** is a diagram of an exemplified purchase review information list window **D-2**;
FIG. **21** is a diagram of an exemplified estimate items confirmation window **D-3**;
FIG. **22** is a diagram of an exemplified negotiation application input window **F-1**;
FIG. **23** is a diagram of an exemplified questionnaire input window;
FIG. **24** is a diagram of an exemplified specification or configuration selection initial window;
FIG. **25** is a diagram of an exemplified warning window;
FIG. **26** is a flowchart of the estimate/assessment processing executed by the dealer server;
FIG. **27** is a flowchart for showing a part of an estimate response input window display subroutine;
FIG. **28** is a flowchart for showing another part of the estimate response input window display subroutine;
FIG. **29** is a flowchart for showing still another part of the estimate response input window display subroutine;
FIG. **30** is a flowchart for showing still another part of the estimate response input window display subroutine;
FIG. **31** is a flowchart for showing a first half of a reference information display subroutine using access history;
FIG. **32** is a flowchart for showing a second half of the reference information display subroutine using access history;
FIG. **33** is a flowchart of a detailed routine performed in step S558 in the reference information display subroutine using access history;
FIG. **34** is a diagram of an exemplified estimate input window displayed on a dealer terminal;
FIG. **35** is a graph for showing the distribution of estimated prices;
FIG. **36** is a diagram of an example of a part of an access history detail window;
FIG. **37** is a rough diagram for showing principal points after an estimate request in the embodiment;
FIG. **38** is a rough diagram for showing principal points after an estimate request in a first modification of the embodiment; and
FIG. **39** is a rough diagram for showing principal points after an estimate request in a second modification of the embodiment.

### DETAILED DESCRIPTION OF THE INVENTION

Now, a preferred embodiment of the invention will be described with reference to the accompanying drawings. Herein, a customized vehicle means a vehicle having optional specifications determined, by utilizing a vehicle sales support or configuration system of the invention (which is designated as a customized vehicle estimate/order or configuration system in this embodiment), by a user (hereinafter sometimes referred to as a customer) selecting one of a plurality of optional specifications or configurations with respect to each of a plurality of items (such as an engine, transmission, tires, wheels and interior) on the basis of a standard vehicle (base vehicle) having predetermined specifications or configurations and equipment. In other words, different specifications or configurations in number corresponding to the number of combinations of the optional specifications or configurations of the plural items are set with respect to a vehicle sold by using the present system (namely, a vehicle whose specifications can be selected by using the present system), and a customized vehicle corresponds to a vehicle having optional specifications or configurations selected from the plural specifications or configurations by a user.

### - Whole structure of hardware -

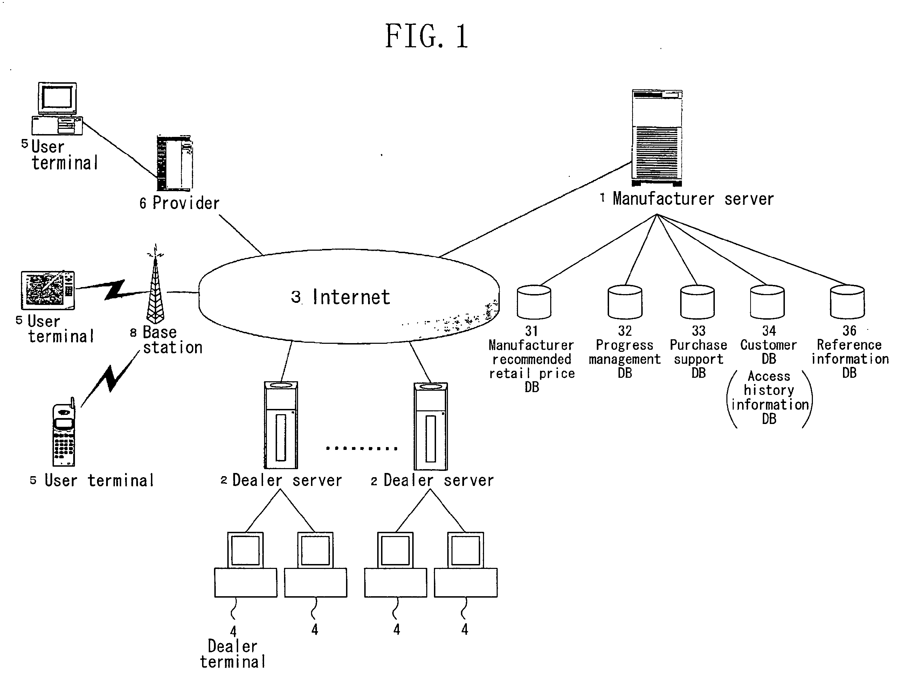

FIG. **1** is a conceptual diagram for showing the whole structure of the customized vehicle estimate/order or configuration system used for supporting vehicle sales to customers and/or vehicle configuration by customers online.

In FIG. **1**, a reference numeral **1** denotes a server computer used by a manufacturer manufacturing a customized vehicle that is selected in specifications or configurations and is ordered by using the customized vehicle estimate/order system. This server computer **1** principally functions as an application server for a dealer terminal **4** or a user terminal **5** (that is a customer terminal operated by a customer) described below. This server computer may be installed in the manufacturer or operated outside the manufacturer by a third party for the manufacturer, and hereinafter, this server computer is designated as the manufacturer server.

The manufacturer server **1** includes a manufacturer recommended retail price database **31** (hereinafter, database is designated as DB for short), a progress management DB **32**, a purchase support DB **33**, a customer DB **34** and a reference information DB **36**, and can make an access by a general method to any of these DBs if necessary during its operation.

In the manufacturer recommended retail price DB **31**, data with which retail prices recommended by the manufacturer (namely, manufacture recommended retail prices) can be calculated are stored with respect to optional specifications or configurations selectable for a customized vehicle in association with identification information (customize numbers) for specifying the respective specifications or configurations.

In the progress management DB **32**, progress situations ranging from manufacture to delivery of customized vehicles ordered by using the present system, such as a stock situation, an assembly situation (manufacture situation) and a conveyance situation, are stored with respect to each customized vehicle. The contents of the progress management DB **32** are manually or automatically changed/updated in order.

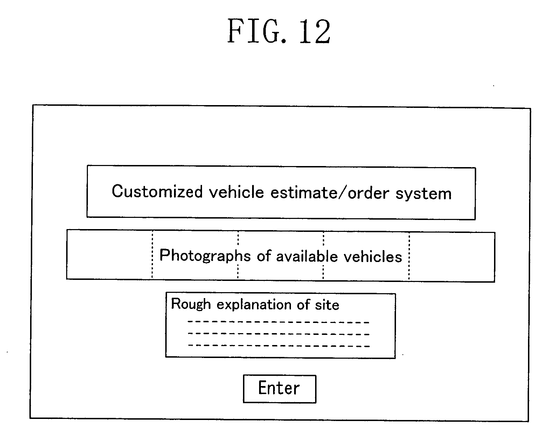

In the purchase support DB **33**, various windows (shown in FIGS. **12** through **25**) to be displayed on the user terminal **5** in the customized vehicle estimate/order system and information of vehicles having respective specifications or configurations (purchase support information) are stored.

In the customer DB **34**, information of customized vehicles already selected by each user by using the present system, estimated prices of the customized vehicles presented to the user and assessment of a trade-in vehicle presented to the user are stored in association with a user ID issued to each user with the order of presentation discriminable. Also, personal information (an address, an e-mail address and the like) input by each user in the present system, information obtained when the user previously purchased a vehicle (such as estimate information, time of purchase, a type of purchased vehicle and the like), information of onerous service provided to the user by a dealer described below, and access history information of accesses made by the user online to the manufacturer server **1** for specification or configuration selection and/or an estimate request described later are also stored in association with the user ID. The information regarding users stored in the customer DB **34** are provided to a dealer as reference information to be used by the dealer in setting an estimated price similarly to information stored in the reference information DB **36** described below, and hence, the customer DB **34** also plays a similar roll to the reference information DB **36**. Also, since the customer DB **34** thus stores the access history information of each user, it also corresponds to an access history information database.

In the reference information DB **36**, market price information of vehicles of brands different from that of the vehicle whose specifications or configuration are to be selected by using the present system are stored. The market price information of the different brand vehicles are calculated on the basis of prices of used vehicles of the brands to be stored in the reference information DB **36**. Also, estimated prices input by each dealer are stored in the reference information DB **36** correspondingly to the specifications or configuration selected by a user as described below. Furthermore, when the user applies for negotiations, negotiation application information is stored in the reference information DB **36** correspondingly to the specifications or configuration and the estimated price related to the negotiation application. In addition, reference information other than those related to the user (that are stored in the customer DB **34**) are also stored in the reference information DB **36**. The negotiation application information and the specifications or configuration and the estimated price related to the negotiation application are also stored in the customer DB **34** correspondingly to the user ID.

In FIG. **1**, a reference numeral **2** denotes a server computer installed in each of a plurality of dealers (distributors) for selling vehicles (hereinafter referred to as the dealer server). This server computer has a function as a server of a LAN (Local Area Network) constructed in each dealer, and the function as the server includes a function as a gateway for mutually connecting the LAN and internet **3** described below. Although the dealer is a distributor for selling vehicles in this embodiment, it may be a vehicle sales company, a shop of the vehicle sales company or a sales agent in private capacity.

Also, a reference numeral **4** denotes a client computer installed in each dealer (which is designated as the dealer terminal as described above) and operated by a person in charge of the dealer. The dealer terminal **4** and the dealer server **2** together construct what is called a server-client environment in the LAN constructed in the dealer.

The dealer terminal **4** can make an access to the manufacturer server **1** through the dealer server **2** and the internet **3** if necessary during the operation thereof as described below. With the dealer terminal **4** thus connected to (logged in) the manufacturer server **1**, the dealer terminal **4** and the manufacturer server **1** together construct the so-called server-client environment.

A reference numeral **3** denotes the internet, that is, typical communications lines. A reference numeral **5** denotes a user terminal such as a personal computer, a portable information terminal and a cellular phone. The user terminal **5** is operated by a user of the present system, and may be installed in the user's house, carried by the user or installed in each dealer.

In this structure, the manufacturer server **1**, the dealer server **2**, the dealer terminal **4** and the user terminal **5** can perform two-way communications via the internet **3** by a general communication scheme for sending/receiving information on the estimate/order of a customized vehicle. At this point, in the case where the user terminal **5** is a personal computer, telephone lines and the like are also used via a provider (internet provider) **6**. Alternatively, in the case where the user terminal **5** is a portable information terminal or a cellular phone, public radio telephone lines and the like are also used via a base station **8**. Such communication means may adopt general arrangements and is herein not described in detail.

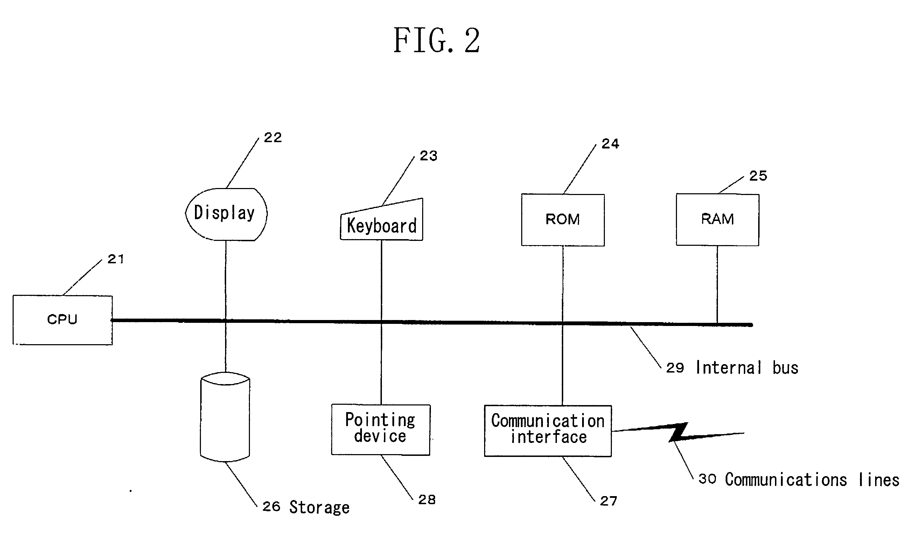

FIG. **2** is a block diagram for showing an exemplified internal structure of the manufacturer server **1**, the dealer server **2**, the dealer terminal **4** or the user terminal **5.**

In FIG. **2,** a reference numeral **22** denotes a display for displaying various windows such as a liquid crystal display device, and a reference numeral **23** denotes a keyboard, that is, input means. A reference numeral **24** denotes a ROM in which a boot program and the like are stored. A reference numeral **25** denotes a RAM for temporarily storing results of various processing. A reference numeral **26** denotes a storage, such as a hard disk drive (HDD), in which an information processing program and the like including the vehicle sales support program for operating the present system are stored. A reference numeral **27** denotes a communication interface used for communication with an external device via communications lines **30** (corresponding to the internet **3** and the like in this embodiment), which is a modem or a TA when the user terminal **5** is a personal computer and is a radio transmitter-receiver when the user terminal **5** is a portable information terminal or a cellular phone. A reference numeral **28** denotes a pointing device such as a mouse. These internal elements are connected to one another through an internal bus **29**, and a CPU (central processing unit) **21** controls the entire apparatus in accordance with the information processing program stored in the storage **26**. In this embodiment, the display **22**, the keyboard **23** and the pointing device **28** together provide what is called a man-machine interface to a user in each display window described later.

In this embodiment, each of the manufacturer server **1**, the dealer server **2**, the dealer terminal **4** and the user terminal **5** has software (a software program) of a general communication protocol capable of internet communications, an internet browsing function and a mailing function for sending/receiving data via the internet **3** in accordance with the software and general software for rendering a browser.

The CPU **21** appropriately executes these software, so that the manufacturer server **1** and the user terminal **5** or the dealer terminal **4** can together construct the so-called server-client environment with the user terminal **5** or the dealer terminal **4** connected to (logged in) the manufacturer server **1** via the internet **3**.

### - Functional architecture of customized vehicle estimate/order system -

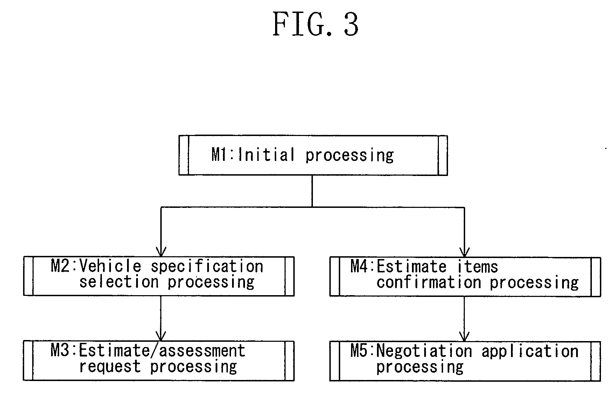

FIG. **3** is a diagram for showing the functional architecture of processing modules executed in the customized vehicle estimate/order system. Each block shown in this drawing corresponds to a unit of software (a software program) roughly divided depending upon a function described in detail below, executed by the CPU **21** of the manufacturer server **1**, and these functional units are designated as processing modules in this embodiment. These processing modules are previously stored in the storage **26** of the manufacturer server **1**. In other words, the storage **26** of the manufacturer server **1** is a recording medium in which the vehicle sales support program for operating the present system is recorded.

Now, the function of each processing module will be roughly described.
1. Initial processing (M1): A top window (homepage) of the customized vehicle estimate/order system is displayed in the user terminal **5**, and the top window can be transit to another window for selecting specifications or configuration of a customized vehicle or requesting for an estimate.
2. Vehicle specification or configuration selection processing (M2): An environment is provided to the user terminal **5**, in which a preferably customized vehicle (preferred specifications or configurations) can be selected by the user operating the user terminal **5** by repeatedly selecting a desired one of choices previously prepared with respect to each of a plurality of items regarding a type of vehicle to be purchased. Furthermore, when the customized vehicle (selected specifications or configurations) is determined, this processing can transit to estimate/assessment request processing (M3).
3. Estimate/assessment request processing (M3): If the user having determined the customized vehicle desires to get an estimated price of the customized vehicle, the user selects a preferred distributor to ask for estimate. The selected distributor is informed that it has been selected by the user and is provided with an environment in which estimate of the price of the customized vehicle and assessment of a trade-in vehicle can be requested.
4. Estimate items confirmation processing (M4): When the user operating the user terminal **5** has already been presented an estimated price of the customized vehicle whose specifications or configurations have been determined, the user is provided with information such as change course of the estimated price up to the present time and a specification or configuration list. This processing can transit to a window for allowing the user to apply for negotiations.
5. Negotiation application processing (M5): When the user wants to enter into negotiations for actual purchase of the customized vehicle whose specifications or configurations have been determined, this is informed of the dealer selected by the user.

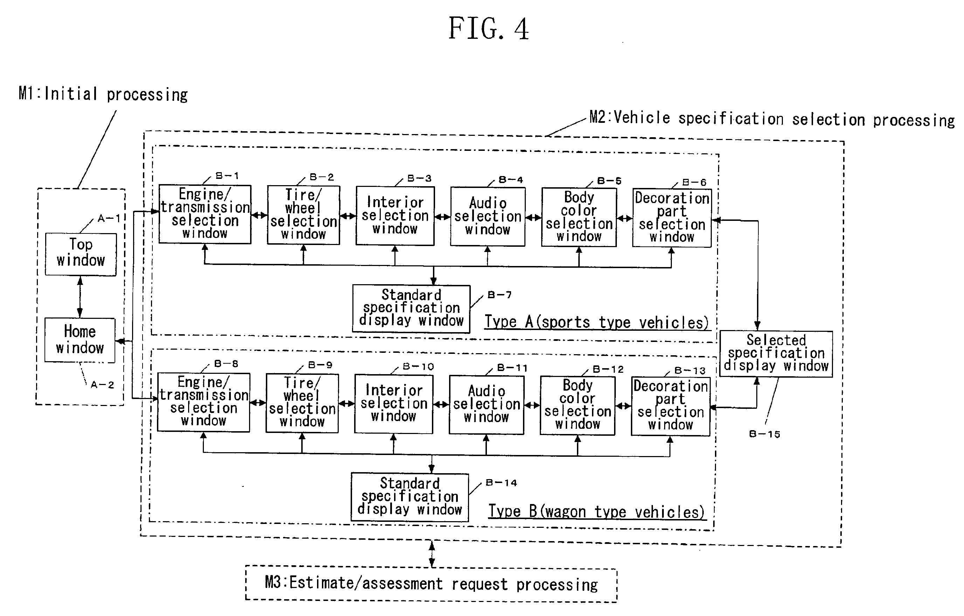

In the customized vehicle estimate/order system of this embodiment, when the processing modules described above are executed by the manufacturer server **1** with the browser program executed by the user terminal **5**, the user terminal **5** is linked to the customized vehicle estimate/order system as a client, so as to provide the man-machine interface by using display of a variety of windows as shown in FIGS. **4** through **7** (and FIGS. **12** through **25**) on the display **22** of the user terminal **5**. The user utilizes this man-machine interface, so as to select specifications or configurations and make an estimate request or an order of a desired customized vehicle by operating the user terminal **5**.

### - Software executed by manufacturer server 1 -

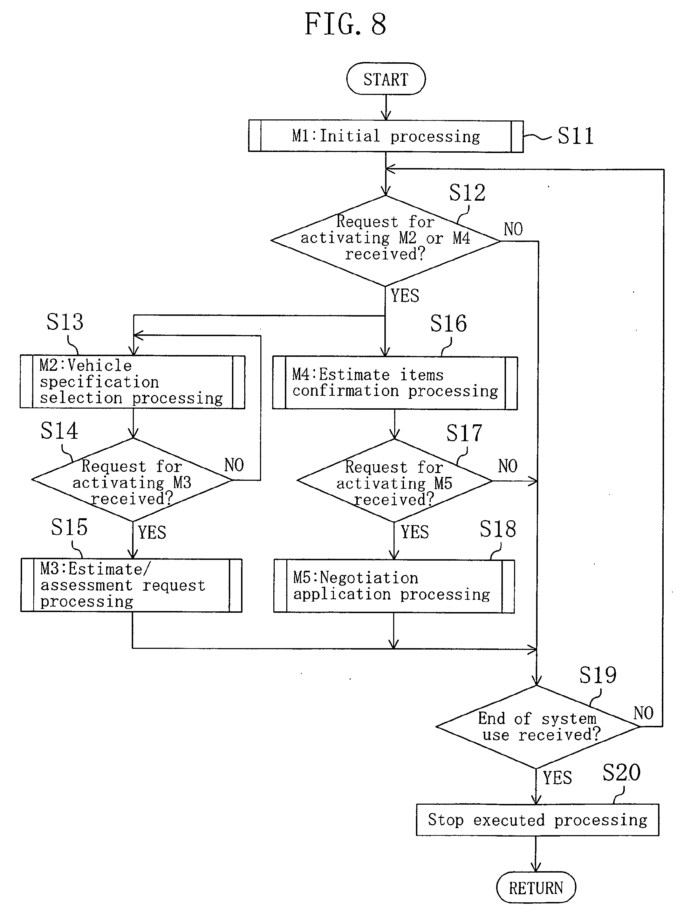

Now, the software executed by the CPU **21** of the manufacturer server **1** will be described. In the following, state transition between the respective processing modules will be first described with reference to a flowchart of FIG. **8** and transition of display windows in the respective processing modules will be described with reference to FIGS. **4** through **7**.

### (1) State transition between modules:

FIG. **8** is a flowchart for roughly showing the whole processing executed by the manufacturer server **1** in this embodiment.

Each of the processing modules M1 through M5 executed by the manufacturer server **1** has a function to display a variety of window windows described below on the display **22** of the user terminal **5** and to realize an input operation in each displayed window, and the transition of the display windows in the respective processing modules will be described later with reference to FIGS. **4** through **7**.

Referring to FIG. **8**, the processing modules are executed as follows:

Steps S11 and S12: When the user terminal **5** is linked to a Web site of the present system via the internet **3**, the initial processing (M1) is executed (step S11). During the execution, it is determined whether or not data for requesting activation of the vehicle specification or configuration selection processing (M2) or the estimate items confirmation processing (M4) is received from the user terminal **5** (step S12). When the data is received, the flow proceeds to step S13 or step S16 in accordance with the content of the data, and when not, the flow proceeds to step S19.

Steps S13 through S15: The vehicle specification or configuration selection processing (M2) is executed (step S13), and during the execution, it is determined whether or not data for requesting activation of the estimate/assessment request processing (M3) is received from the user terminal **5** (step S14). When the data is received, the estimate/assessment request processing (M3) is executed (step S15).

Steps S16 through S18: The estimate items confirmation processing (M4) is executed (step S16), and during the execution, it is determined whether or not data for requesting activation of the negotiation application processing (M5) is received from the user terminal **5** (step S17). When the data is received, the negotiation application processing (M5) is executed (Step S18).

Steps S19 and S20: During the execution of each processing module, it is determined whether or not data corresponding to the end of use of the present system is received from the user terminal **5** (step S19). When the data is received, the processing of the processing module currently executed is stopped (step S20), and when not, the flow returns to step S12.

### (2) Transition of display windows in each processing module:

Now, the transition of the display windows in each of the roughly divided five processing modules described above will be described with reference to FIGS. **4** through **7**. The relationship in the state transition between the processing modules each surrounded with a broken line block in FIGS. **4** through **7** accords with the functional architecture described with reference to FIG. **3**.

### <Initial processing (M1) and vehicle specification or configuration selection processing (M2)>

FIG. **4** is a diagram for showing the transition of the display windows in the initial processing (M1) and the vehicle specification or configuration selection processing (M2).

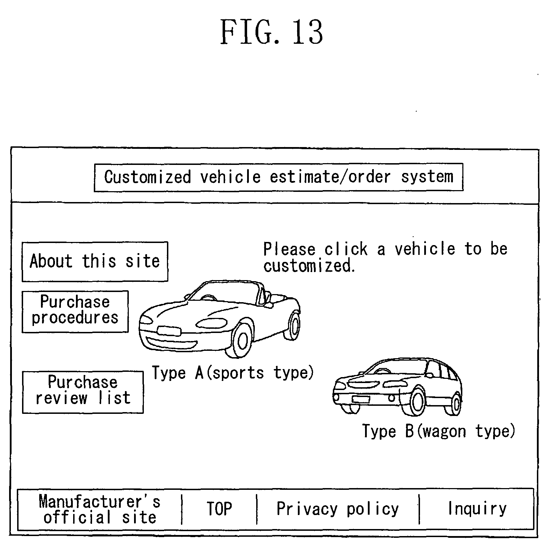

In FIG. **4**, the initial processing (M1) displays a top window **A-1** (shown in FIG. **12**) corresponding to the homepage window of the present system. The top window **A-1** exemplified in FIG. **12** includes an "enter" button to be operated by a user who desires to utilize the present system capable of specification or configuration selection, an estimate request and an order of a customized vehicle (namely, a user of the user terminal **5** linked to the manufacturer server **1** via the internet **3**). When the "enter" button is operated, the initial processing (M1) displays a home window **A-2** (shown in FIG. **13**) of the present system on the user terminal **5**.

FIG. **13** is a diagram for showing an example of the home window **A-2** displayed by the initial processing (M1).

The display window shown in FIG. **13** includes a plurality of operation buttons, and when an operation button of "about this site" or "purchase procedures" is operated, a predetermined explanatory window is displayed on the user terminal **5**. Alternatively, when an operation button of "purchase review list" is operated, the function of the estimate items confirmation processing (M4) described later is provided to the user terminal **5**.

Also, in the home window **A-2**, a photograph of a type A, that is, sports type vehicles or a type B, that is, wagon type vehicles is clicked, the function of the vehicle specification or configuration selection processing (M2) is provided to the user terminal **5**. In this embodiment, specifications or configurations preferable for a user can be selected with respect to the type A of sports type vehicles and the type B of wagon type vehicles exemplified for the sake of simplification.

When a desired vehicle type is selected in the home window **A-2**, the user is allowed to select preferred specifications or configurations on the basis of a standard vehicle (base vehicle) of the selected vehicle type through the function of the vehicle specification or configuration selection processing (M2). In other words, specifications or configurations previously set as the standard vehicle in the present system can be replaced with other specifications or configurations, or new equipment (optional equipment) not set in the standard vehicle can be added through the specification or configuration selection operation by the user.

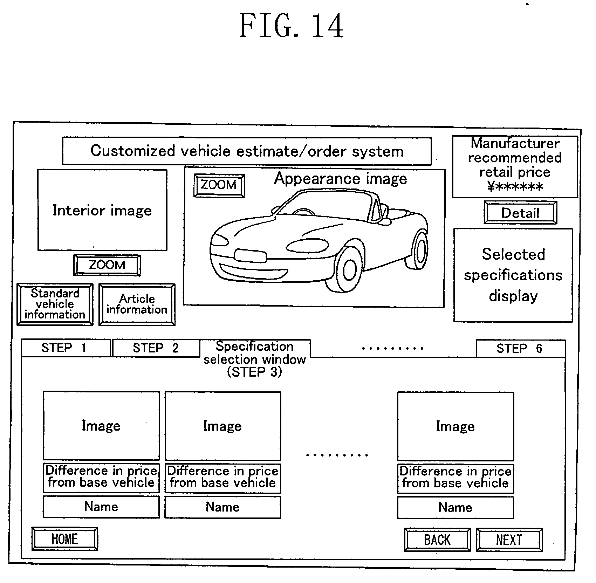

FIG. **14** is a diagram for showing an exemplified format of vehicle specification selection windows (**B-1** through **B-15**) to be displayed on the user terminal **5** by the vehicle specification selection processing (M2). The basic format of these windows is basically common to engine/transmission selection windows **B-1** and **B-8**, tire/wheel selection windows **B-2** and **B-9**, interior selection windows **B-3** and **B-10**, audio selection windows **B-4** and **B-11**, body color selection windows **B-5** and **B-12** and decoration part selection windows **B-6** and **B-13**.

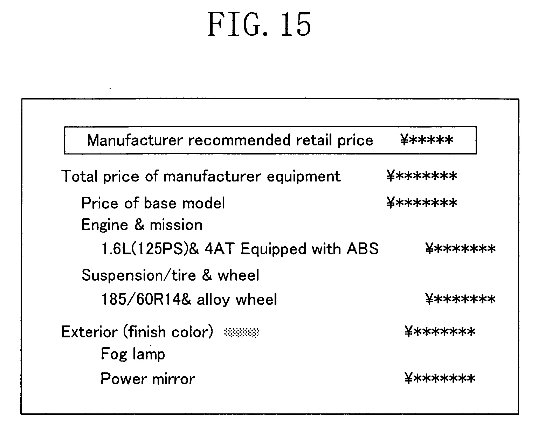

In an upper half area of each vehicle specification selection window, the followings are displayed: Photographs of appearance and interior of the customized vehicle selected by the user (purchase support information); a "ZOOM" button for expanding the photograph; an "article information" button for displaying various information (purchase support information) regarding the customized vehicle; a "standard vehicle information" button for displaying standard specification display window **B-7** or **B-14** including the specifications and items of the standard vehicle corresponding to the base of the customized vehicle; a manufacturer recommended retail price of the customized vehicle (calculated on the basis of the data stored in the manufacturer recommended retail price DB **31**); a "detail" button for displaying the details of the manufacturer recommended retail price as exemplified in FIG. **15**; and details of the selected specifications or configurations.

The purchase support information are selected from the data stored in the purchase support DB **33** correspondingly to the respective specifications and sent to the user terminal **5** by the manufacturer server **1**.

FIG. **15** is a diagram for showing an exemplified detail window of the manufacturer recommended retail price displayed when the "detail" button of FIG. **14** is operated. Thus, the manufacturer recommended retail price and prices of optional specifications or configurations selected in the respective items based on which the manufacturer recommended retail price is set are displayed.

Furthermore, in the vehicle specification or configuration selection processing (M2), the selection windows from **B-1** to **B-6** in this order, when the type A is selected, and the selection windows from **B-8** to **B-13** in this order, when the type B is selected, are displayed on the user terminal **5**. Therefore, the user is restricted to make selection in this order of display windows.

In a lower half area of each vehicle specification selection window, the selecting steps respectively corresponding to the windows **B-1** through **B-6** or **B-8** through **B-13** are displayed, for example, in the form of a plurality of overlapped folders.

In the exemplified window of FIG. **14**, the folder of the third step (namely, the interior selecting step) is selected to be displayed. In the selected folder (in an active state), selectable plural choices of the item to be selected by the user in the step are displayed in the forms of an image like a photograph, a price difference from that of the standard vehicle and a name (so that when an image of a preferred choice is clicked, the choice can be selected).

In a lowermost area of each vehicle specification selection window, a "HOME" button for jumping to the home window **A-2** (of FIG. **13**) and "BACK" and "NEXT" buttons for transiting to display windows before and behind are displayed.

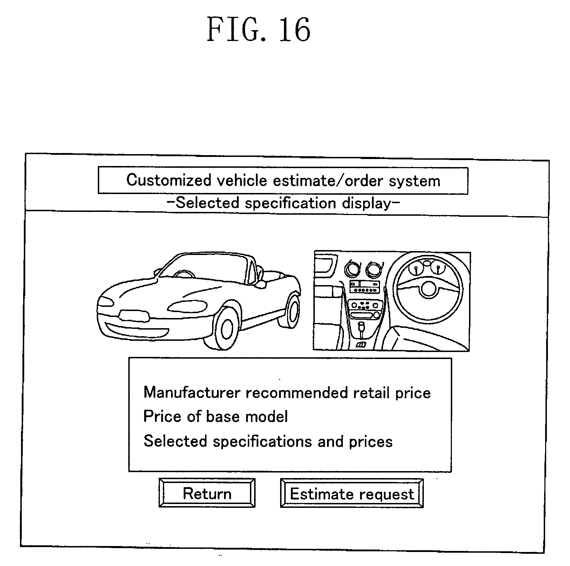

When the selection is completed about all the items (steps) in the vehicle specification or configuration selection processing (M2), a selected specification display window **B-15** of FIG. **16** is displayed on the user terminal **5**. When the selection is thus completed, identification information (customize number) of the customized vehicle of the user is determined.

FIG. **16** is a diagram for showing an example of the selected specification or configuration display window **B-15** displayed on the user terminal **5** in the vehicle specification or configuration selection processing (M2). In this selected specification display window **B-15**, for example, photograph images of the appearance and the interior of the customized vehicle whose specifications have been selected, the manufacturer recommended retail price, the price of the standard vehicle, the selected specifications and the prices thereof are displayed. Also, an "estimate request" button for requesting for an estimate of the customized vehicle of one dealer selected by the user from a plurality of dealers (namely, a dealer of which the user desires to request for an estimate of the customized vehicle) is displayed.

When the "estimate request" button is operated for requesting for an estimate of the dealer in the selected specification display window **B-15**, the processing can transit to the estimate/assessment request processing (M3) described later. On the other hand, when a "return" button of the selected specification display window **B-15** is operated, the specifications can be changed by successively returning to the vehicle specification or configuration selection windows respectively corresponding to the aforementioned steps.

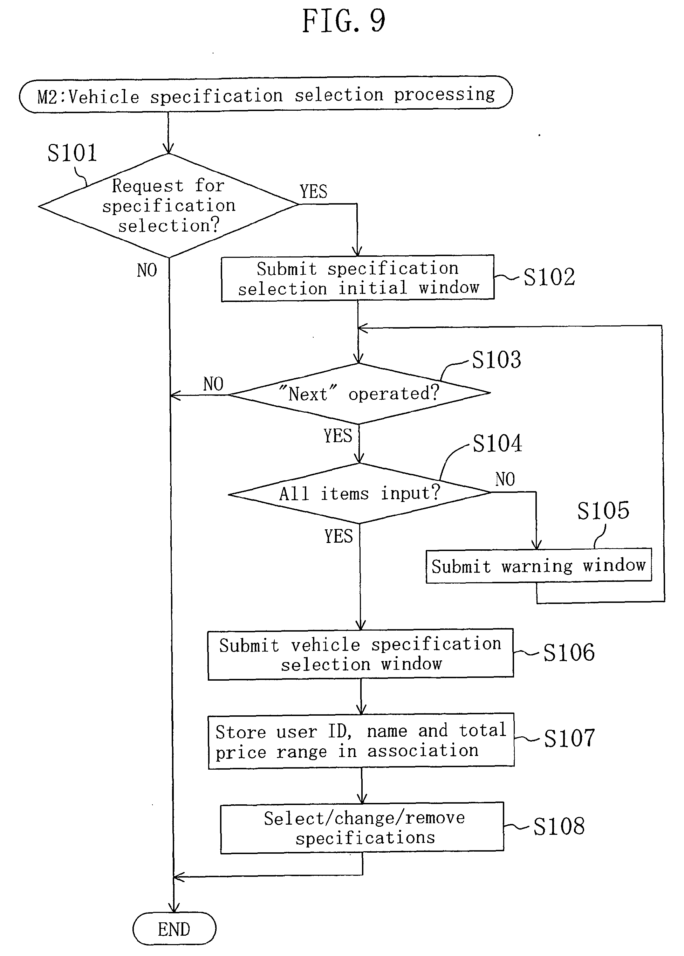

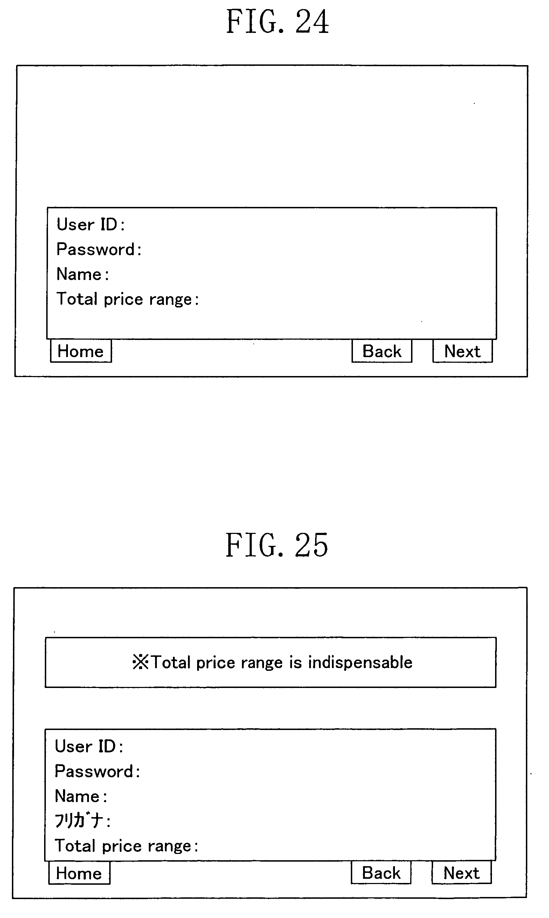

The vehicle specification or configuration selection processing (M2) will now be described with reference to a flowchart of FIG. **9**. First, in step S101, it is determined whether or not there is a specification or configuration selection request from the user terminal **5** (namely, whether or not a desired type (the type A or the type B) is selected in the home window **A-2**). When NO, namely, when there is not a specification selection or configuration request, the processing is ended. When YES, namely, when there is a specification selection request, the flow proceeds to step S102, where a specification or configuration selection initial window (which is omitted in FIG. **4**) as shown in FIG. **24** is sent to be displayed on the user terminal **5**. In the specification or configuration selection initial window, items to be input by the user, such as a user ID, a password, the name of the user and a total price range (preferable consumption price) planned for payment of the purchase are displayed.

Next, in step S103, it is determined whether or not a "Next" button of the specification selection initial window is operated. When NO, namely, when the "Next" button is not operated, the processing is ended. When YES, namely, when the "Next" button is operated, the flow proceeds to step S104, where it is determined whether or not all input items have been input in the specification selection initial window.

When NO in step S104, namely, when not all the input items have been input, the flow proceeds to step S105, where a warning window as shown in FIG. **25** is sent to be displayed on the user terminal **5** and then the flow returns to step S103. In this warning window, a warning that the item not input (that is, the "total price range" in FIG. **25**) is an indispensable item and the same input items as those of the specification selection initial window are displayed.

On the other hand, when YES in step S104, namely, when all the items have been input, the flow proceeds to step S106, where the vehicle specification or configuration selection window **B-1** or **B-8** is sent to be displayed on the user terminal **5**. In next step S107, the user ID, the name and the total price range input in the specification or configuration selection initial window are stored correspondingly to one another in the customer DB **34**. As described later, customer information in more detail is input by the user at the time of an estimate/assessment request, and these information are together stored in the customer DB **34**.

In next step S108, specifications are selected, changed or removed in accordance with the operation performed by the user thereafter, and then the processing is ended.

During the specification or configuration selection made by the user, a specification change history, an access history, a Web connecting time, the number of Web pages browsed and the like are stored in the customer DB **34** in association with the user ID and the like (to be provided to a person in charge of the dealer as reference information in setting an estimated price as described later).

### <Estimate/assessment request processing (M3)>

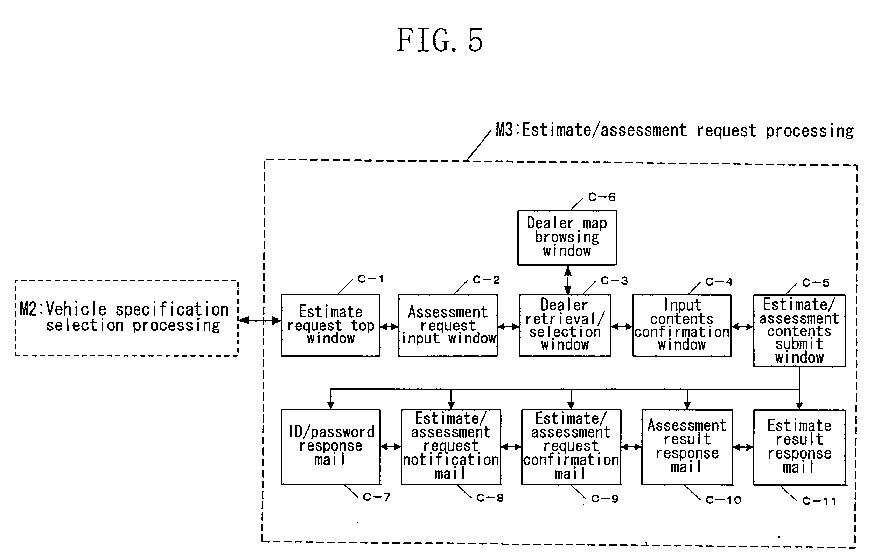

FIG. **5** is a diagram for showing the transition of display windows in the estimate/assessment request processing (M3) and an e-mail sending function involved in an estimate/assessment request. This processing is activated by operating the "estimate request" button after the specification or configuration selection of the customized vehicle in the vehicle specification or configuration selection processing (M2). The estimate/assessment request processing (M3) can be transit to the vehicle specification or configuration selection processing (M2) in accordance with the operation performed by the user.

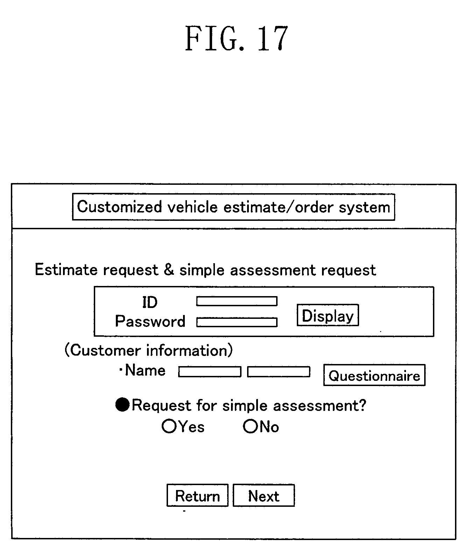

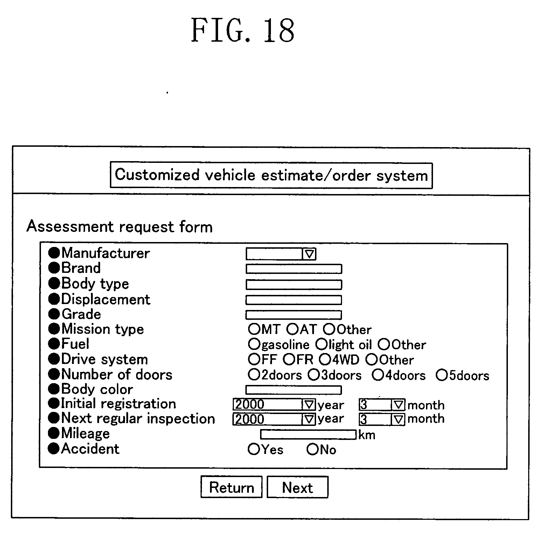

As shown in FIG. **5,** as display windows transit in the estimate/assessment request processing (M3), an estimate request top window **C-1** (shown in FIG. **17**), an assessment request input window **C-2** (shown in FIG. **18**), a dealer retrieval/selection window **C-3,** an input contents confirmation window **C-4,** an estimate/assessment contents submit window **C-5** and a dealer map browsing window **C-6** can be displayed on the user terminal **5.**

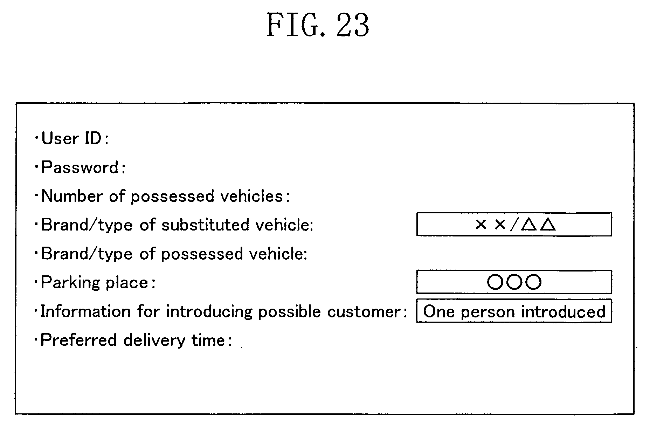

Estimate request top window **C-1** (shown in FIG. **17**): In this window, the user of the user terminal **5** inputs the following: The name of the user (the user ID and the password when already issued); and items of a questionnaire displayed in a questionnaire input window (shown in FIG. **23**) by operating a "questionnaire" button (which items include the number of vehicles possessed, a preferred brand of substituted vehicle, a type of possessed vehicle, a type of parking place, information for introducing a possible customer, and a desired delivery time, and although not shown in FIG. **23**, a customer group of the user (selected from previously set groups such as a young family group) and a competitive vehicle the user regards competitive with the vehicle to be purchased). Thus, the user can request (demand) for an estimate of the customized vehicle previously determined in the vehicle specification selection processing (M2) of the dealer selected in the dealer retrieval/selection window **C-3** and for assessment of a trade-in vehicle if desired. In other words, after inputting the information related to the user in the estimate request top window **C-1**, when "YES" is selected with respect to an assessment request in the same window, the assessment request input window **C-2** is displayed, and when "NO" is selected, the dealer retrieval/selection window **C-3** is displayed.

Assessment request input window **C-2** (shown in FIG. **18**): In this window, the user of the user terminal **5** inputs predetermined specification items (such as the name of the manufacturer, the brand of the vehicle, the displacement and the mileage) of a vehicle to be trade-in (a trade-in vehicle), and when a "Next" button is selected, the dealer retrieval/selection window **C-3** is displayed.

Dealer retrieval/selection window **C-3** (not shown in any drawing): In this window, the user of the user terminal **5** can select and specify a dealer of which the user desires to request for an estimate of the customized vehicle and assessment of the trade-in vehicle by using the user terminal **5**. For specifying a dealer, for example, dealers in the neighborhood of the address of the user previously input in the estimate request top window **C-1** may be automatically presented, or a list of all the dealers may be displayed so that the user can select a desired one in the list. In either case, it is convenient for the user if the dealer map browsing window **C-6** in which the location of each dealer can be found on a map can be expanded from the dealer retrieval/selection window **C-3**.

When the dealer for asking for the estimate and the assessment of the trade-in vehicle is selected in the dealer retrieval/selection window **C-3** by the user, the input contents confirmation window **C-4** is displayed on the user terminal **5** of the user.

Input contents confirmation window **C-4** (not shown in any drawing): In this window, the following information are displayed in the form of a list: The contents of the specifications of the customized vehicle previously determined in the vehicle specification or configuration selection processing (M2); the manufacturer recommended retail price; the contents of the items input by the user in the assessment request input window **C-2** if the assessment of a trade-in vehicle is selected; and information related to the dealer specified in the dealer retrieval/selection window **C-3** for requesting for the estimate/assessment. After the user confirms the contents of the information displayed in the input contents confirmation window **C-4**, when the user actually requests for the estimate/assessment through a predetermined operation, the operation signal is sent to the manufacturer server **1**, and the estimate/assessment contents submit window **C-5** is displayed on the user terminal **5**.

Estimate/assessment contents submit window **C-5** (not shown in any drawing): In this window, information that the estimate/assessment request is accepted by the manufacturer server **1** having received the estimate/assessment request (the operation signal) and that an e-mail regarding the request will be sent to the user from the dealer selected by the user are displayed. Thus, the estimate/assessment request processing (M3) includes a function to send/receive e-mails in response to the estimate/assessment request sent from the user terminal **5**.

ID/password reply mail **C-7**: When the estimate request thus sent from the user is the first request, an e-mail including issued ID and password is sent to the mail address previously input by the user.

Estimate/assessment request notification mail **C-8**: An e-mail is sent from the manufacturer server **1** to the dealer server **2** of the selected dealer to notify that the dealer is requested for the estimate of the customized vehicle (and the assessment of the trade-in vehicle) by the user. This e-mail includes, for example, information for specifying the user (such as the address, the name and the mail address) input in the estimate request top window **C-1**, the specifications or configurations of the customized vehicle to be estimated, and the specification or configuration items of the trade-in vehicle input in the assessment request input window **C-2**.

Estimate/assessment request confirmation mail **C-9**: An e-mail is sent to the mail address previously input by the user from the dealer selected by the user for confirming the estimate/assessment request.

Assessment result response mail **C-10**: An e-mail for informing an assessment result is sent to the mail address previously input by the user from the dealer requested for the assessment of the trade-in vehicle by the user.

Estimate result response mail **C-11**: An e-mail for informing an estimate result (estimated price) is sent to the mail address previously input by the user from the dealer requested for the estimate by the user.

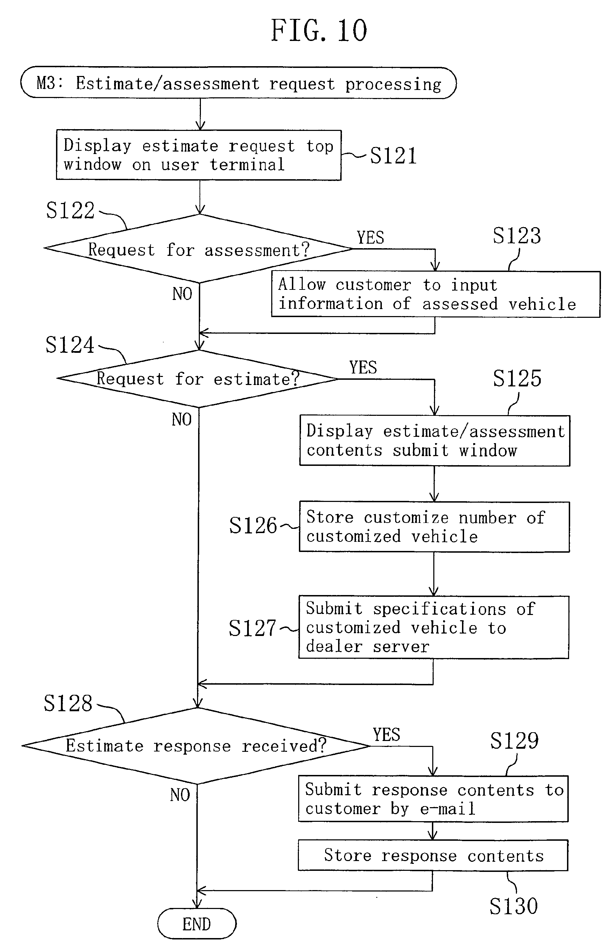

FIG. **10** is a flowchart of the estimate/assessment request processing (M3) executed by the manufacturer server **1.**

Referring to FIG. **10,** in step S121, the estimate request top window **C-1** (shown in FIG. **17**) is displayed on the user terminal **5,** and validity of the user ID, the password and the other customer information input in this window is checked.

In next step S122, it is determined whether or not there is an assessment request. When NO, namely, when there is not an assessment request, the flow proceeds to step S124. When YES, namely, when there is an assessment request, the flow proceeds to step S123, where the assessment request input window **C-2** (shown in FIG. **18**) is displayed on the user terminal **5** for allowing the user to input the information of the trade-in vehicle desired to be assessed, and then the flow proceeds to step S124.

In step S124, it is determined whether or not an estimate request has been received. When NO, namely, when an estimate request has not been received, the flow proceeds to step S128. When YES, namely, when an estimate request has been received, the flow proceeds to step S125, where the estimate/assessment contents submit window **C-5** is displayed on the user terminal **5**. In next step S126, the customize number of the customized vehicle is stored in the customer DB **34** together with the input customer information (including the user ID, the name, the contents of the questionnaire items and the preferred price range), and the data input in step S123 when the assessment is requested for. Thereafter, in step S127, the specifications of the customized vehicle together with the customer information and the manufacturer recommended retail price are sent by e-mail (namely, the estimate/assessment request notification mail **C-8**) as an estimate request to the dealer server **2** of the selected dealer, and then the flow proceeds to step S128.

In step S128, it is determined whether or not an estimate response (including an assessment response when the assessment is requested for) has been received via the Web or by e-mail from the dealer server **2**. When NO, namely, when an estimate response has not been received, the processing is ended. When YES, namely, when an estimate response has been received, the flow proceeds to step S129, where the content (estimated price) of the response is sent, by e-mail, to the customer having requested for the estimate. In next step S130, the content (estimated price) of the response is stored in association with the specifications of the customized vehicle (the specifications selected by the customer) in the customer DB **34** and the reference information DB **36**. Thereafter, the processing is ended.

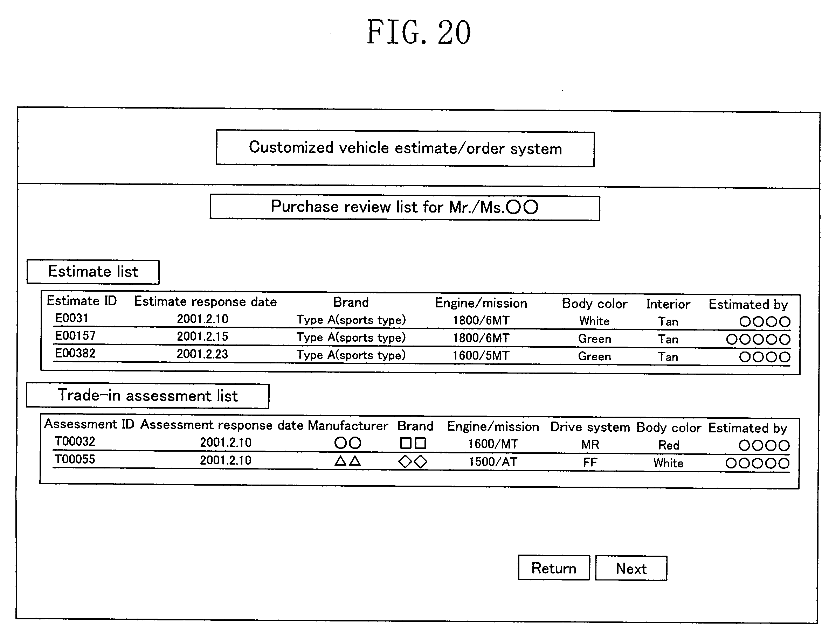

On the basis of the content of the response stored in step S130, the detailed content of the response is presented to the customer in a purchase review information list window **D-2** (shown in FIG. **20**) by accessing a URL added to the e-mail sent to the user terminal **5** in step S129 or by operating the operation button of the "purchase review list" in the home window **A-2.**

### <Estimate items confirmation processing (M4)>

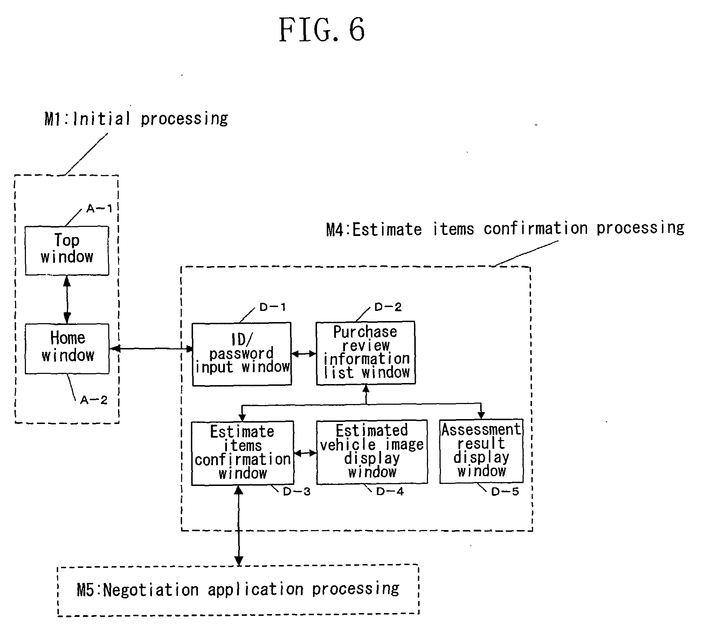

FIG. **6** is a diagram for showing transition of display windows in the estimate items confirmation processing (M4). This window is activated by operating the operation button of the "purchase review list" in the home window **A-2** displayed in the initial processing (M1). The estimate items confirmation processing (M4) can be transit to the initial processing (M1) or the negotiation application processing (M5) in accordance with the operation performed by the user.

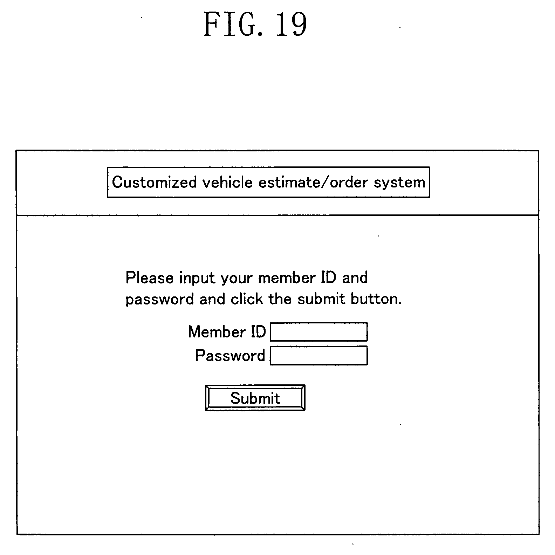

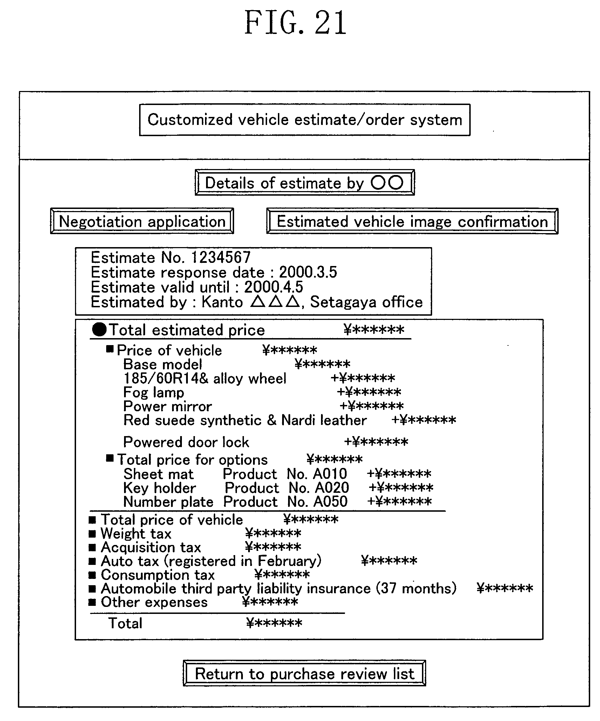

As shown in FIG. **6,** as display windows transit in the estimate items confirmation processing (M4), an ID/password input window **D-1** (shown in FIG. **19**), the purchase review information list window **D-2** (shown in FIG. **20**), an estimate items confirmation window **D-3** (shown in FIG. **21**), an estimated vehicle image display window **D-4** and a trade-in assessment result display window **D-5** can be displayed on the user terminal **5.**

ID/password input window **D-1** (shown in FIG. **19**): In this window, the user inputs the user ID (member ID) and the password previously issued to the user and operates a "submit" button, so as to log in the present system (the vehicle manufacture server **1**). After completing logging in, the purchase review information list window **D-2** (shown in FIG. **20**) is displayed on the user terminal.

Purchase review information list window **D-2** (shown in FIG. **20**): In this window, a list of estimated prices of all vehicles selected in the specifications or configurations by the user and the assessment result is displayed. When the user selects a desired item by clicking or the like, a window including the detailed contents of the selected item is displayed on the user terminal **5** of the user.

Estimate items confirmation window **D-3** (shown in FIG. **21**): In this window, the user can confirm the detailed contents of the estimate previously presented to the user. When a "negotiation application" button is operated, the processing can be transit to the negotiation application processing (M5). When an "estimated vehicle image confirmation" button is operated, the image of a vehicle corresponding to the currently displayed customized vehicle can be confirmed in the estimated vehicle image display window **D-4** (not shown in any drawing). When a "return to purchase review list" button is operated, the window can be transit to the purchase review information list window **D-2** (shown in FIG. **20**).

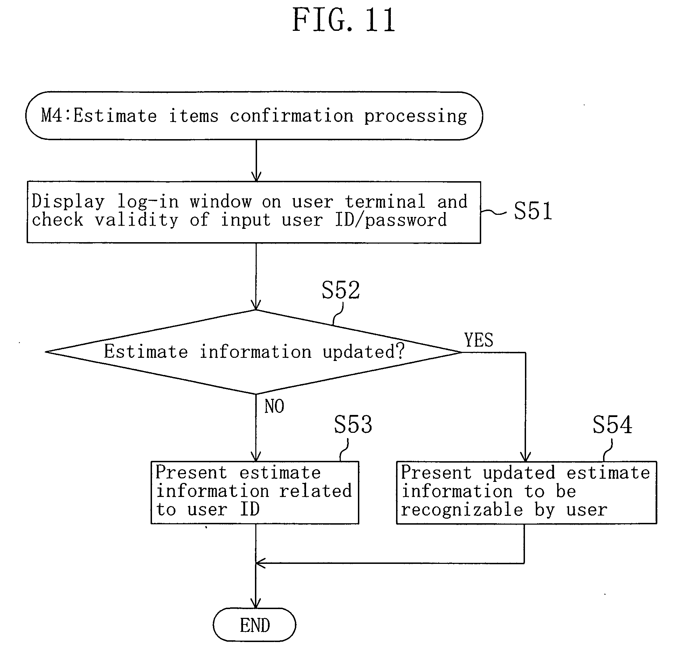

FIG. **11** is a flowchart for showing the estimate items confirmation processing (M4) executed by the manufacturer server **1**.

Step S51 of FIG. **11**: The log-in window, namely, the ID/password input window **D-1** (shown in FIG. **19**) is displayed on the user terminal **5**, and the validity of the user ID and the password input in the window is checked.

Step S52: Referring to the customer DB **34**, it is determined whether or not the estimate information related to the user ID has been updated.

Step S53: The estimate information related to the user ID stored in the customer DB **34** is fetched, and the fetched estimate information is displayed on the user terminal **5** of the user in the form of the purchase review information list window **D-2** (shown in FIG. **20**) or the estimate items confirmation window **D-3** (shown in FIG. **21**) in accordance with an operation performed in the purchase review information list window **D-2**.

Step S54: The updated estimate information related to the user ID stored in the customer DB **34** is displayed on the user terminal **5** of the user in the form of the purchase review information list window **D-2** (shown in FIG. **20**) or the estimate items confirmation window **D-3** (shown in FIG. **21**) in accordance with an operation performed in the purchase review information list window **D-2,** with the update recognizable by the user.

### <Negotiation application processing (M5)>

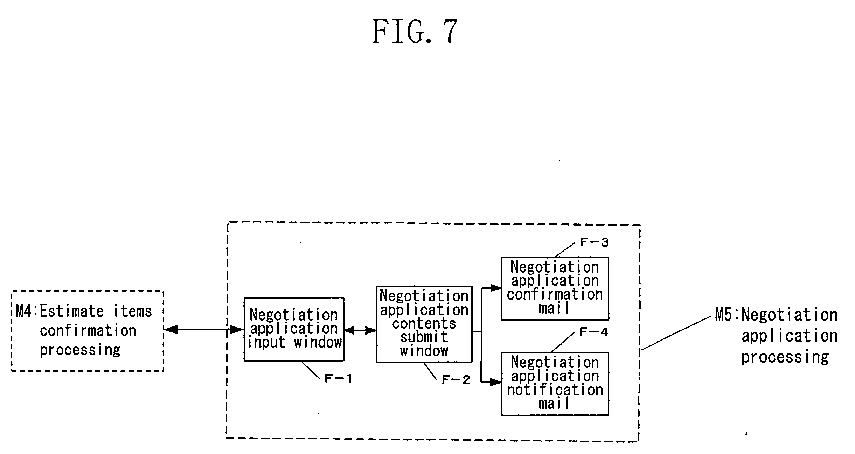

FIG. **7** is a diagram for showing transition of display windows in the negotiation application processing (M5) and an e-mail sending function involved in a negotiation application. The negotiation application processing (M5) is activated by operating the "negotiation application" button in the estimate items confirmation window **D-3** (shown in FIG. **21**). The negotiation application processing (M5) can be transit to the estimate items confirmation processing (M4).

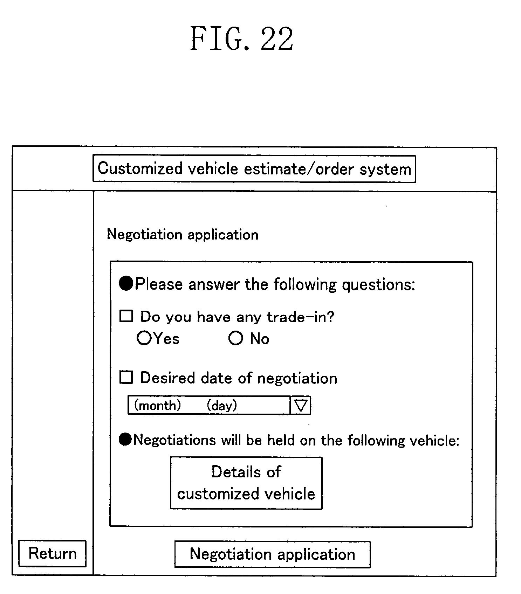

As display windows transit in the negotiation application processing (M5), a negotiation application input window **F-1** (shown in FIG. **22**) and a negotiation application contents submit window **F-2** can be displayed on the user terminal **5** of the user.

Negotiation application input window **F-1** (shown in FIG. **22**): In this window, the user can input various items (including whether or not the user has a trade-in vehicle and a desired date for the negotiations) for entering into negotiations with the dealer having presented the estimate of the customized vehicle displayed in the estimate items confirmation window **D-3** (namely, the dealer selected by the user). After inputting the items, when a "negotiation application" button is operated, the negotiation application contents submit window **F-2** is displayed on the user terminal **5**.

Negotiation application contents submit window **F-2** (not shown in any drawing): In this window, information that the request contents input in the negotiation application input window **F-1** has been sent and accepted by the manufacturer server **1** and that the selected dealer will contact the user about the negotiations by e-mail or telephone are displayed.

The negotiation application processing (M5) includes a function to send/receive e-mails in response to the negotiation application information sent in the negotiation application contents submit window **F-2** from the user terminal **5**.

Negotiation application confirmation mail **F-3**: An e-mail is sent from the manufacturer server **1** to the mail address previously input by the user for confirming that the negotiation application has been made.

Negotiation application notification mail **F-4**: An e-mail is sent from the manufacturer server **1** to the selected dealer for notifying that the negotiation application has been made by the user (negotiation application information). This e-mail includes the contents displayed in the negotiation application input window **F-1** and the information related to the user.

When the manufacturer server **1** receives the negotiation application regarding the customized vehicle from the user, it sends the negotiation application information of this negotiation application to the dealer selected by the user and stores the negotiation application information in the reference information DB **36** correspondingly to the selected specifications or configurations and the estimated price related to the negotiation application.

After the negotiations with the dealer, the customized vehicle can be actually ordered to the manufacturer by, for example, making an access to the manufacturer server **1** by using the dealer terminal **4** through the dealer server **2**, or by using separate dedicated communications lines from a dealer terminal different from that of the present system.

### - Software executed by dealer server 2 -

Now, the software executed by the CPU **21** of the dealer server **2** (namely, estimate/assessment processing corresponding to the estimate/assessment request processing (M3) executed by the manufacturer server **1**) will be described.

The dealer server **2**, which has received the estimate request including the specifications or configurations of the customized vehicle sent from the manufacturer server **1**, sends the specifications or configuration of the customized vehicle to the dealer terminal **4** operated by a person in charge of the selected dealer.

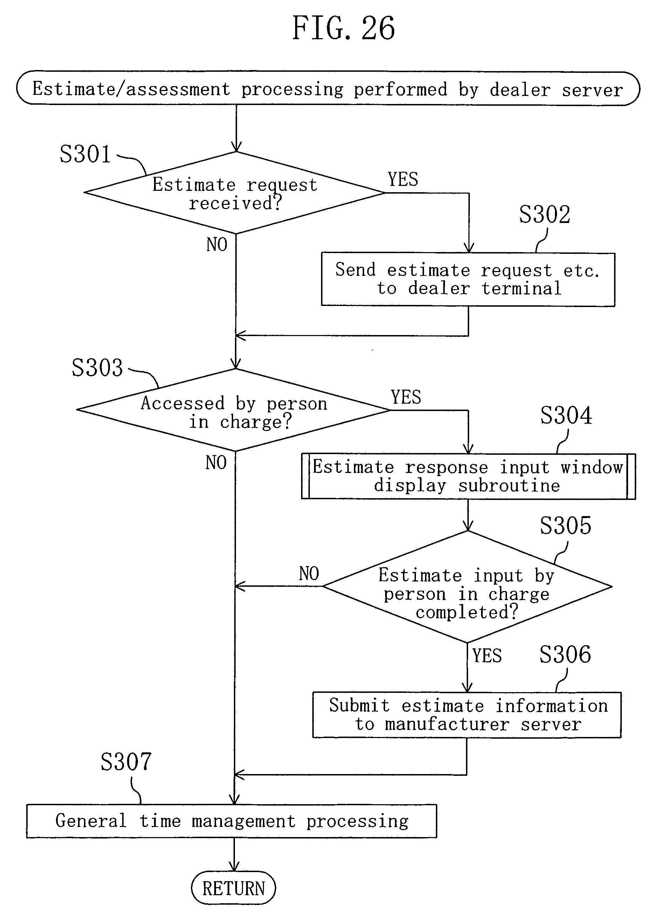

The processing (estimate/assessment processing) performed by the dealer server **2** will be specifically described with reference to a flowchart of FIG. **26**.

In step S301, it is determined whether or not an estimate request (including an assessment request) has been received from the manufacturer server **1**. When NO, namely, when an estimate request has not been received, the flow proceeds to step S303. When YES, namely when an estimate request has been received, the flow proceeds to step S302, where the estimate request, the specifications or configurations of the customized vehicle and the customer information sent from the manufacturer server **1** are sent to the dealer terminal **4** operated by the person in charge, and then, the flow proceeds to step S303.

In step S303, it is determined whether or not an access for inputting an estimated price has been made from the dealer terminal **4** operated by the person in charge. When NO, namely, when the access has not been made, the flow proceeds to step S307. When YES, namely, when the access has been made, the flow proceeds to step S304, where an estimate response input window display subroutine described below is executed so as to allow the person in charge to input an estimated price. In next step S305, it is determined whether or not the person in charge has completed inputting the estimated price. When NO, namely, when the input of the estimated price has not been completed, the flow proceeds to step S307. When YES, namely, when the input of the estimated price has been completed, the flow proceeds to step S306, where the input estimated price information is sent to the manufacturer server **1**, and then, the flow proceeds to step S307. The manufacturer server **1** having received the estimated price information stores the estimated price information in the customer DB **34** in association with the user ID.

In step S307, general time management processing is executed, and thereafter, the flow returns.

When an assessment request is also received together with the estimate request, the person in charge assesses the trade-in vehicle in accordance with the specification or configuration items of the trade-in vehicle received by the estimate/assessment request notification mail **C-8**.

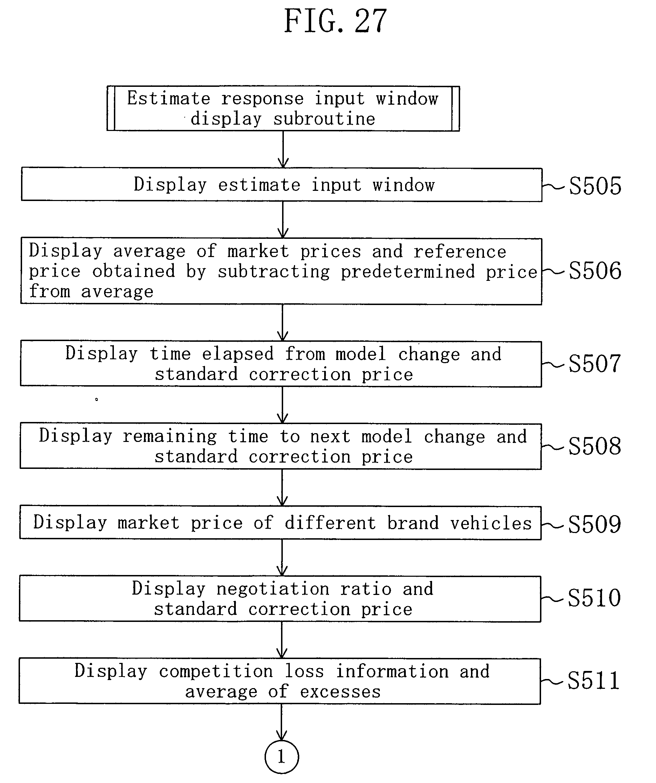

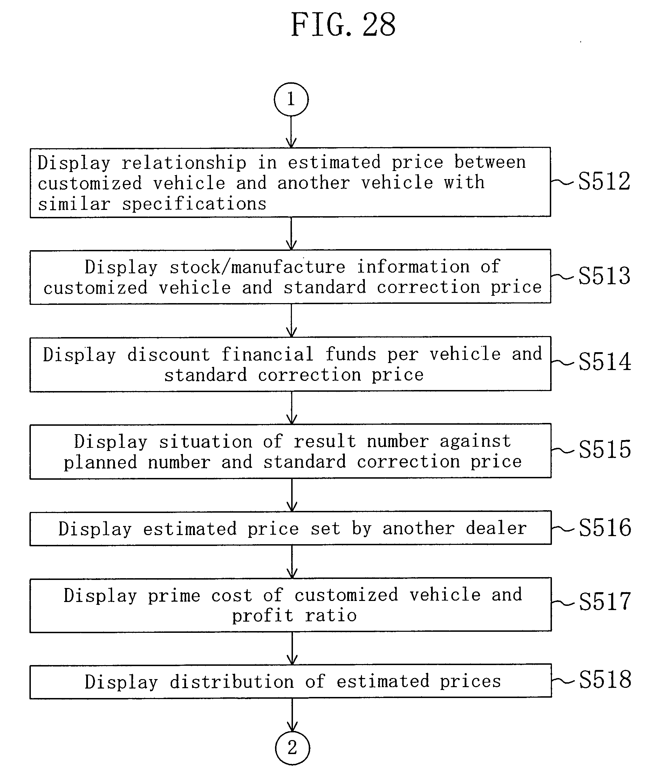

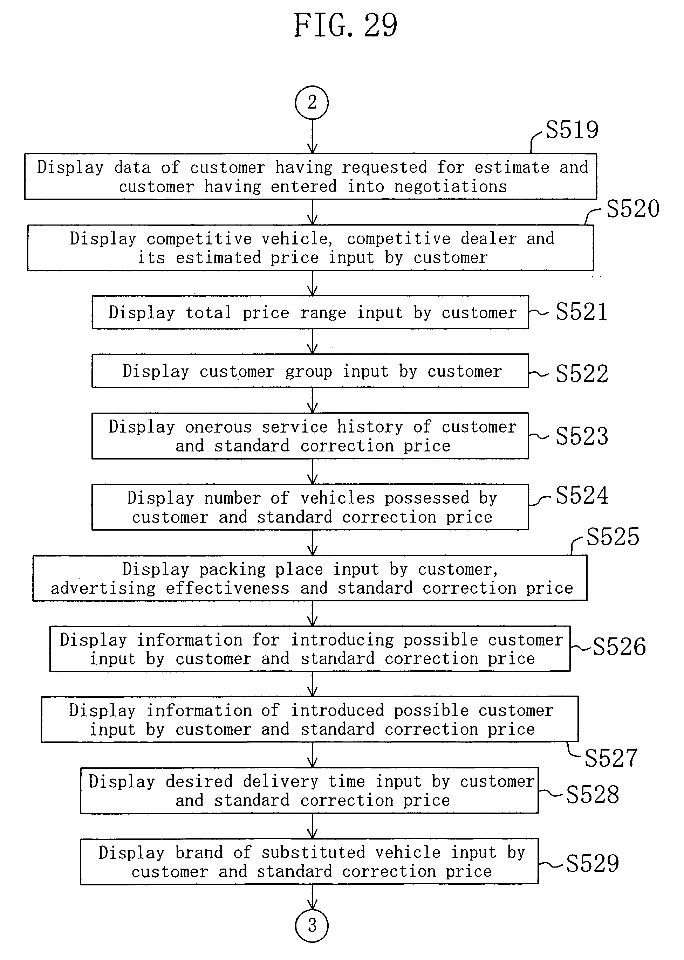

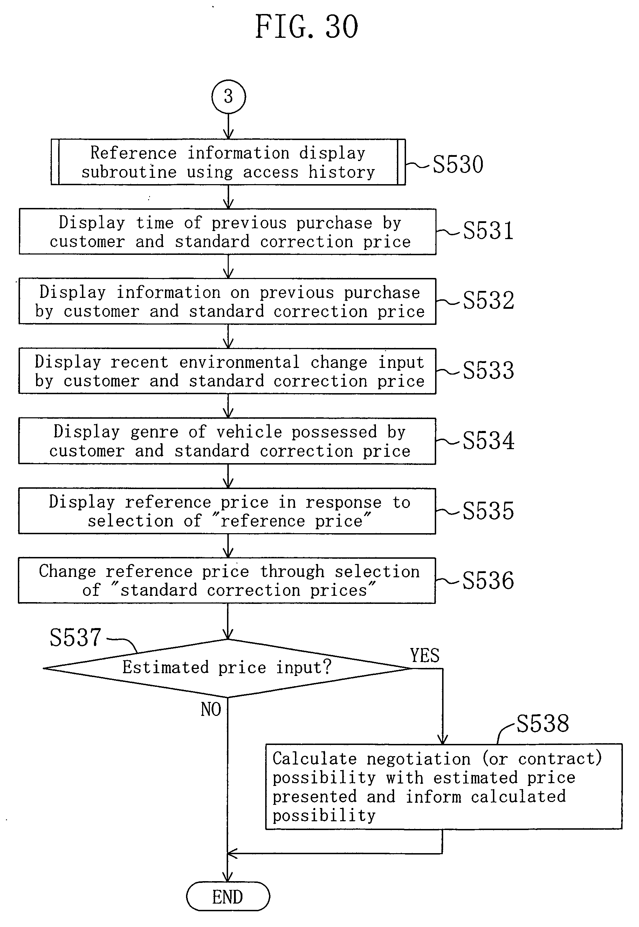

Now, the estimate response input window display subroutine performed in step S304 will be specifically described with reference to FIGS. **27** through **30**. In the estimate response input window display subroutine, reference information to be used by the person in charge for deciding the estimated price of the customized vehicle are displayed on the dealer terminal **4** operated by the person in charge.

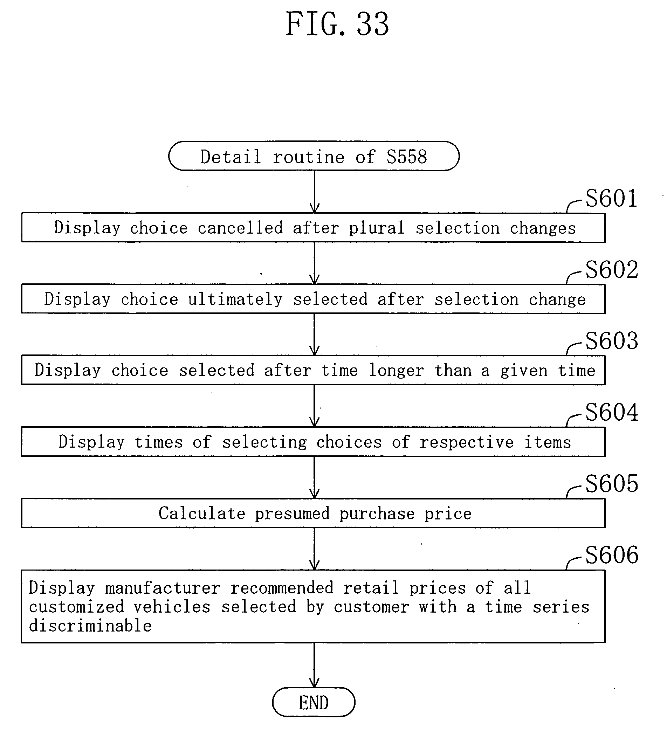

In step S505, an estimate input window as shown in FIG. **33** is displayed. In next step S506, an average of market prices (namely, prices at which vehicles are sold offline without using the present system) set by the dealer with respect to vehicles having specifications equivalent to those of the customized vehicle (related to the estimate request) or similar to them (namely, specifications or configurations different from those of the customized vehicle to a given or smaller extent) is calculated so as to display the average as an offline price in the estimate input window, and a price obtained by subtracting a predetermined price (that corresponds to, for example, business effort and can be optionally set) from the offline price is displayed as a reference price (lowered as the offline price is lowered) in the estimate input window.

In the calculation of the average, the price of a specified vehicle sold (such as a vehicle sold at a special price) is excluded, the price of a vehicle with similar specifications is corrected to a price of a vehicle with equivalent specifications, and the price of a vehicle of the same type as the customized vehicle is increased in weighting. Also, the price of a vehicle recently sold is increased in weighting and the price of a vehicle sold a rather long time ago is reduced in weighting. Furthermore, the price of a vehicle sold in the same or near month is given predetermined weight (which is larger when a vehicle was sold in the same month than when it was sold in a near month), and the prices of vehicles sold in the other months are excluded.

In next step S507, the time elapsed from model change time (start of selling) of the vehicle type including the customized vehicle (which is 3 years and 6 months in FIG. **33**) and a standard correction price based on the elapsed time (which is -10,000 yen as displayed in parentheses following "3 years and 6 months" in FIG. **33**) are displayed. This standard correction price is shifted in the minus direction as the elapsed time is longer.

In next step S508, the remaining time up to the next model change of the vehicle type including the customized vehicle (which is 6 months in FIG. **33**) and a standard correction price based on the remaining time (which is -20,000 yen in FIG. **33**) are displayed. This standard correction price is shifted in the minus direction as the remaining time is shorter.

In next step S509, vehicles of different brands having specifications or configurations equivalent or similar to those of the customized vehicle are selected from the market price information of vehicles of different brands stored in the reference information DB **36**, and the market price information of the selected vehicles of different brands are displayed. In this case, competitive vehicles of different brands alone may be specified without displaying the market price information of vehicles of different brands not specified. Also, with respect to a vehicle of different brand having specifications similar to those of the customized vehicle, a difference in the specifications from the customized vehicle is preferably displayed.

In next step S510, a negotiation ratio against the number of estimates presented with respect to vehicles with specifications or configurations equivalent to (that may be similar to) those of the customized vehicle by the dealer (namely, a ratio of the number of cases of entering into negotiations to the total number of estimate requests received by the dealer) and a standard correction price based on the negotiation ratio are displayed. This standard correction price is shifted in the minus direction as the negotiation ratio is lower. Furthermore, in the calculation of the negotiation ratio, data of a specified vehicle sold (for example, a vehicle sold at a special price) is excluded, data of a vehicle with similar specifications is corrected to that of a vehicle with equivalent specifications or configurations to those of the customized vehicle, and the same type of vehicle as the customized vehicle is increased in weighting. Also, the data of a vehicle recently sold is increased in weighting and the data of a vehicle sold a rather long time ago is reduced in weighting. Furthermore, the data of a vehicle sold in the same or near month is given predetermined weight, and the data of vehicles sold in the other months is excluded. The negotiation ratio may be replaced with a contract ratio against the number of estimate requests (namely, a ratio of the number of cases of reaching contract to the total number of estimate requests received by the dealer).

In next step S511, competition loss information regarding vehicles with specifications or configurations equivalent to (that may be similar to) those of the customized vehicle in competition with another dealer (namely, a ratio that an estimated price presented by the dealer is too high as compared with one presented by another dealer to reach negotiations (or a contract)) and an average of excesses beyond estimated prices presented by the other dealers are displayed.

In next step S512, in the case where the estimated price of the customized vehicle has been input by the person in charge, the relationship between the input estimated price and an estimated price of another vehicle with similar specifications that has been already presented by the dealer to the customer is displayed. This relationship includes, for example, inconsistency between a difference in the specifications or configurations and a difference in the estimated price (namely, inconsistency that an estimated price of a vehicle having equivalent specifications or configurations to the customized vehicle that should be higher (or lower) than an estimated price of another vehicle with similar specifications or configurations is lower (or higher)), and a too large difference between the estimated prices as compared with a difference between the specifications (namely, inconsistency that an estimated price of a vehicle having equivalent specifications or configurations to the customized vehicle is too high (or low) as compared with an estimated price of another vehicle with similar specifications).

In next step S513, the stock situation (which is the stock situation in the dealer in particular but may be the stock situation in another dealer or the manufacturer) and the manufacture situation of vehicles having equivalent specifications or configurations to the customized vehicle and a standard correction price based on these situations are displayed. This standard correction price is shifted in the minus direction when the stock is comparatively large, and is set in consideration of cost of transport to the dealer if the stock is in another dealer.

In next step S514, discount financial funds per vehicle of the dealer and a standard correction price based on the discount financial funds are displayed. The discount financial funds per vehicle corresponds to a value obtained by dividing the total reduction financial funds of the dealer by the number of vehicles sold in the same month of the previous year or in the previous month. The number of sold vehicles may be replaced with the number of presented estimates, and the total discount financial funds may be displayed instead of the discount financial funds per vehicle.

In next step S515, the situation of the number of vehicles actually sold against the number of vehicles planned to be sold in the current month by the dealer and a standard correction price based on the situation are displayed. This standard correction price is shifted in the minus direction when the number of actually sold vehicles is comparatively small as compared with the planned number. The situation of the number of actually sold vehicles against the planned number may be replaced with the situation of the result number of estimates against the planned number of estimates or the situation of the result number of negotiations against the planned number of negotiations.

In next step S516, an estimated price of a vehicle having equivalent specifications or configurations to the customized vehicle input by another dealer (preferably input within a predetermined period) is read from the reference information DB **36** to be displayed. In this case, an estimated price input by another dealer away from the selected dealer by a predetermined distance or more (namely, another dealer not located within the sales area of the selected dealer) is preferably not displayed. Also, another dealer may be specified by the selected dealer so that estimated prices input by dealers not specified may not be displayed. Furthermore, an estimated price presented by another dealer at the request from the same customer is preferably not displayed. In addition, estimated prices of not only a vehicle having equivalent specifications or configurations to the customized vehicle but also a vehicle having similar specifications or configurations input by another dealer are preferably displayed. In this case, a difference in the specifications or configurations from those of the customized vehicle is preferably displayed together. In the case where there are a large number of estimated prices of such vehicles with similar specifications or configurations, data of a predetermined number of vehicles with a smaller difference in the specifications or configurations are preferably extracted. Alternatively, a ranking of the estimated price may be displayed so that it can be understood which position in the ranking can be get at what estimated price.

In next step S517, the prime cost of the customized vehicle and the profit rate of the dealer or the manufacturer are displayed.

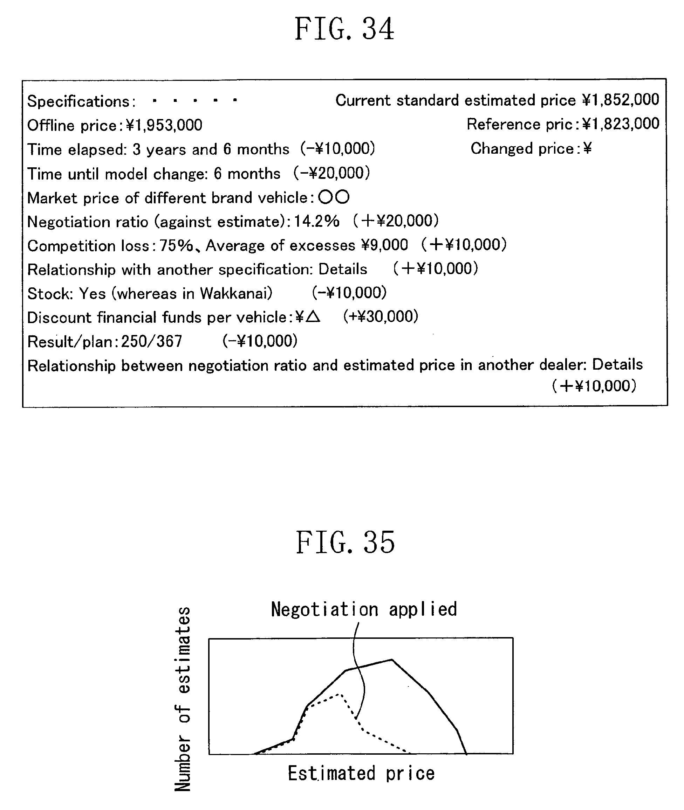

In next step S518, an estimated price presented by another dealer with respect to a vehicle having equivalent specifications or configurations to the customized vehicle and the negotiation application information related to this estimated price are read from the reference information DB **36** so that the estimated price and a ratio of the total number of cases of presenting the same estimated price to the number of cases of entering into negotiations (negotiation ratio) can be displayed. Specifically, when a "detail" button in the lowermost item, "Relationship between negotiation ratio and estimated price", in the estimate input window is operated, a graph for showing distribution of estimated prices (the relationship between an estimated price and the number of times of presenting the estimated price) as shown in FIG. **35** is displayed. This graph also shows the relationship between the estimated price and the number of cases of reaching negotiations with the estimated price presented (shown with a broken line) so that it can be easily grasped how the negotiation ratio is changed in accordance with the estimated price.

In next step S519, with respect to vehicles each having equivalent specifications or configuration to the customized vehicle, data of customers having requested for an estimate and data of customers having entered into negotiations with the dealer (or another dealer located within a predetermined distance from the dealer or all the dealers) are displayed.

In next step S520, competitive vehicles having equivalent specifications or configurations to the customized vehicle (including those available in the dealer), a competitive dealer and an estimated price having been presented by the competitive dealer, which are all input by the customer, are displayed.

In next step S521, the total price range (preferable consumption price) input by the customer in the specification or configuration selection initial window before inputting preferred specifications or configurations is displayed, and in step S522, the customer group input by the customer is displayed.

In next step S523, the onerous service history of the customer and a standard correction price based on the history are displayed. This standard correction price is shifted more largely in the minus direction as a sum of the onerous services received within a predetermined period is larger, is shifted in the minus direction when a periodical inspection service was provided and is shifted in the plus direction when a service for unexpectedly repairing an old model vehicle was provided.

In next step S524, the number of vehicles possessed by the customer and a standard correction price based on the number are displayed. This standard correction price is shifted more largely in the minus direction as the number of possessed vehicles is larger, and is largely shifted in the minus direction when the customer possesses an old model vehicle.

In next step S525, the type of parking place input by the customer, advertising effectiveness of the parking place and a standard correction price based on the effectiveness are displayed. This standard correction price is shifted in the minus direction when the parking place is a conspicuous place and is highly effective for advertising. This shift in the minus direction is born by the manufacturer (because the manufacturer is thus advertised).

In next step S526, the information for introducing a possible customer input by the customer and a standard correction price based on the information are displayed. This standard correction price is shifted in the minus direction when a larger number of possible customers are introduced, and is shifted in the minus direction more largely when the introduced possible customer possesses a type of vehicle sold by another dealer different from the selected dealer than when the introduced possible customer possesses a type of vehicle sold by the dealer. A sales promotion e-mail is sent to a possible customer thus introduced, and information of the possible customer is stored in association with the current customer in the customer DB **34** so that, in the case where the possible customer actually makes a contract, the customer having introduced the possible customer can be provided with a predetermined restoration service (such as cash back and a gratuitous service).

In next step S527, information of an introduced possible customer input by the customer (namely, information that the customer is introduced as a possible customer by another customer) and a standard correction price based on the information are displayed. This standard correction price is shifted in the minus direction when the current customer is introduced by another customer. However, it should be confirmed that the customer is actually introduced by another customer on the basis of the past data. An e-mail that the introduced customer has requested for an estimate is sent to the customer having introduced the current customer.

In next step S528, the desired delivery time input by the customer and a standard correction price based on the desired delivery time are displayed. This standard correction price is more largely shifted in the minus direction as the desired delivery time is earlier, and much more largely shifted in the minus direction when the desired delivery time is before the end of the term.

In next step S529, the desired brand (type) of substituted vehicle input by the customer and a standard correction price based on the desired brand are displayed. This standard correction price is shifted in the minus direction when the desired brand is a vehicle type sold by another dealer and when there is no desired brand of substituted vehicle.

In next step S530, a reference information display subroutine using an access history is executed, so that the history of accesses made by the customer to the manufacturer server **1** (including information capable of being introduced from the access history) and a standard correction price based on the access history can be displayed. The reference information display subroutine using the access history will be described in detail later.

In next step S531, the time when the customer previously purchased a vehicle and a standard correction price based on the time are displayed. This standard correction price is shifted in the minus direction when the time of the previous purchase is before a predetermined period or when time until the next regular inspection of the previously purchased vehicle is shorter than a predetermined period (and the standard correction price may be more largely shifted in the minus direction as the time after the previous purchase is longer or as the time until the next inspection is shorter).

In next step S532, information of the previous vehicle purchase by the customer (such as the estimated price) and a standard correction price based on the information are displayed. This standard correction price is shifted in the minus direction when the estimated price presented at the previous purchase is rather low (namely, the discount ratio is rather high as compared with the average discount ratio at that time).

In next step S533, recent environmental change input by the customer and a standard correction price based on the environmental change are displayed. This standard correction price is shifted in the minus direction when any environmental change such as a change of occupation, a change of address and the increase of the size of family has recently occurred to the customer. Also, the standard correction price is shifted in the minus direction when the specifications or configurations of the customized vehicle accord with the environmental change (for example, a minivan is selected when the size of family is increased).

In next step S534, the genre of the type of vehicle possessed by the customer (which may be that stored in the association with the user ID in the customer DB **34** when the customer purchased the vehicle or may be input by the customer) and a standard correction price based on the genre are displayed. This standard correction price is shifted in the minus direction when the genre of the vehicle type including the customized vehicle is completely different from the genre of the type of the possessed vehicle.

In next step S535, a "reference price" button is clicked in the estimate input window, so as to display the reference price in a reference price column.

In next step S536, the reference price displayed in the reference price column of the estimate input window is changed through selection of the respective standard correction prices displayed as described above.

In next step S537, it is determined whether or not an estimated price has been input in a changed price column. When NO, namely, when the estimated price has not been input, the processing is ended. When YES, namely, when the estimated price has been input, the flow proceeds to step S538, where the possibility of negotiations (or a contract) reached with the estimated price presented is calculated and informed, and then, the processing is ended.

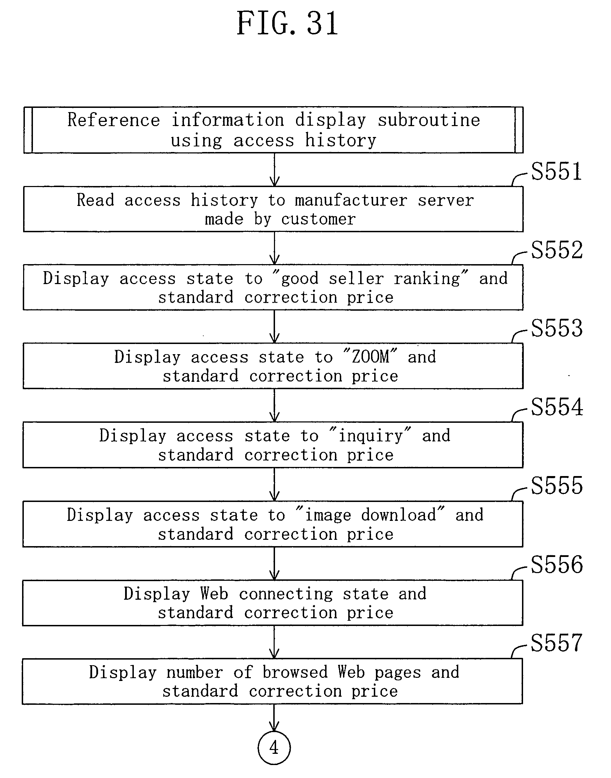

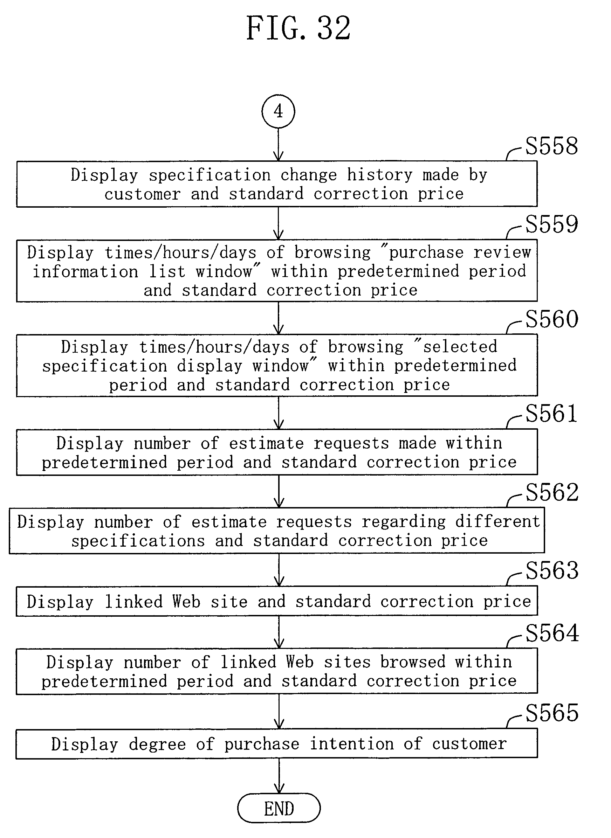

Now, the reference information display subroutine by using the access history performed in step S530 will be described in detail with reference to FIGS. **31** and **32**. In this subroutine, the access history information of the customer including specification or configuration selection history and the like stored in the customer DB **34** and information introducible from the access history information are displayed on the dealer terminal **4**.

Specifically, in first step S551, the access history made by the customer to the manufacturer server **1** is read from the customer DB **34**. In next step S552, the presence or absence of an access made by the customer to "good seller ranking" (which is an operation button (not shown) provided in the selected specification or configuration display window (of FIG. **16**) or the like by which the sales ranking of the customized vehicle is displayed on the user terminal **5**) is retrieved from the access history information of the customer, and the presence or absence of the access and a standard correction price based on this are displayed. This standard correction price is shifted in the minus direction when the customer has made an access to the "good seller ranking" within a predetermined period (of, for example, 1 through 3 months, which is necessary for a customer to consider the purchase; the same applies to the predetermined period mentioned below in the description of this subroutine) (and may be shifted more largely in the minus direction as the number of accesses is larger).

In next step S553, the presence or absence of an access to "ZOOM" made by the customer with respect to the customized vehicle (namely, the operation of the "ZOOM" button in the vehicle specification or configuration selection window (shown in FIG. **14**)) is retrieved from the access history information of the customer, and the presence or absence of the access and a standard correction price based on this are displayed. This standard correction price is shifted in the minus direction when the customer has made an access to the "ZOOM" within the predetermined period (and may be shifted more largely in the minus direction as the number of accesses is larger).

In next step S554, the presence or absence of an access to "inquiry" made by the customer (which can be made by operating the "inquiry" button at the lowermost column in the home window **A-2** (shown in FIG. **13**)) is retrieved from the access history information of the customer, and the presence or absence of the access and a standard correction price based on this are displayed. This standard correction price is shifted in the minus direction when the customer has made an access to the "inquiry" within the predetermined period. The contents of the inquiry may or may not relate to the customized vehicle.

In next step S555, the presence or absence of an access to "image download" made by the customer with respect to the customized vehicle (in which the appearance image of the customized vehicle can be downloaded by clicking the image thereof in the vehicle specification or configuration selection window (shown in FIG. **14**)) is retrieved from the access history information of the customer, and a standard correction price based on this are displayed. This standard correction price is shifted in the minus direction when the customer has made an access to the "image download" within the predetermined period (and may be more largely shifted in the minus direction as the number of accesses is larger).

In next step S556, the Web connecting time when the customer is staying at the Web site of the present system with respect to the customized vehicle and a standard correction price based on the connecting time are displayed. This standard correction price is shifted in the minus direction when the connecting time (namely, the access time to the manufacturer server **1**) is longer than a predetermined time within the predetermined period (and may be more largely shifted in the minus direction as the connecting time is longer).

In next step S557, the number of pages browsed by the customer by using the browser program during the stay in the Web site of the present system (namely, during the access to the manufacturer server **1**) and a standard correction price based on the number of browsed pages are displayed. This standard correction price is shifted in the minus direction when the number of pages browsed within the predetermined period is larger than a predetermined number (and may be more largely shifted in the minus direction as the number of browsed pages is larger).

In next step S558, the specification selection history and the like of the customer with respect to the customized vehicle is displayed. This step S558 is performed specifically as shown in a flowchart of FIG. **33** (namely, through steps S601 through S606).

In step S601, if the customer (the customer having made the estimate request) changed his/her selection a plurality of times with respect to each item (i.e., in each selecting step) in the specification or configuration selection (i.e., in the vehicle specification or configuration selection window) of the customized vehicle related to the estimate request, a choice of which selection was cancelled is extracted from the specification or configuration selection history of the customer to be displayed (whereas, if the selection was changed merely once, the cancelled choice is not displayed because it may be a simple mistake of the customer).

In next step S602, a choice selected by the customer after a selection change (namely, a ultimately selected choice) with respect to each item (i.e., in each selecting step) in the specification selection (i.e., in the vehicle specification or configuration selection window) of the customized vehicle related to the estimate request is extracted from the specification or configuration selection history of the customer to be displayed.

In next step S603, with respect to each item (i.e., in each selecting step) in the specification selection (i.e., in the vehicle specification or configuration selection window) of the customized vehicle related to the estimate request, a choice on the selection of which the customer spent time longer than a predetermined time (which is slightly longer than a time generally spent on the selection) is extracted from the specification or configuration selection history of the customer to be displayed.

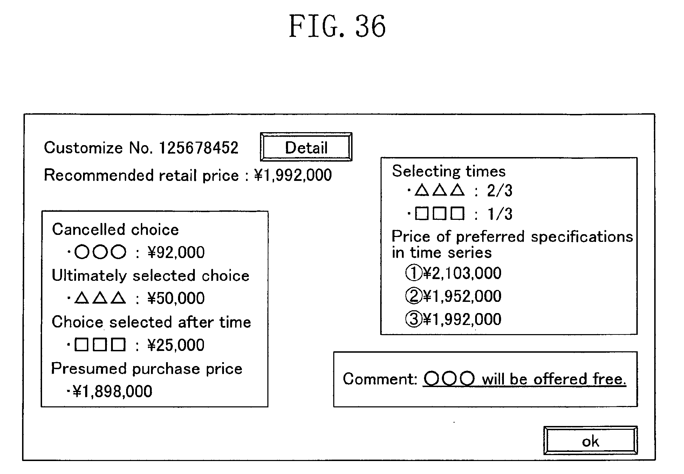

In next step S604, with respect to choices selected in the respective items of the specification or configuration selection of the customized vehicle related to the estimate request, the numbers of times of selecting the respective choices during all the specification or configuration selections made by the customer are calculated on the basis of the specification or configuration selection history of the customer, and the choices and the numbers of selecting times are displayed. The number of times of selecting one choice of each item during all the specification selections is displayed so that the relationship with the number of all specification selections made by the customer can be grasped (for example, when the number of times of selecting a given choice is n and the number of all specification selections made by the customer is m, "n/m" is displayed (as shown in FIG. **36**)).

In next step S605, a presumed purchase price at which the customer is presumed to purchase the customized vehicle related to the estimate request is calculated on the basis of the specification selection history of the customer to be displayed. The presumed purchase price is calculated, for example, by performing predetermined reduction correction on a predetermined standard estimated price of the customized vehicle when the selection of a given item is changed a plurality of times or when time spent on selection in a given item is longer than the predetermined time.

In next step S606, the manufacturer recommended retail prices of all customized vehicles selected by the customer are displayed with a time series (the order of presentation) discriminable.

When "detail of access history" is clicked in an estimate input window (shown in FIG. **34**), an access history detail window as shown in FIG. **36** (wherein merely part related to steps S601 through S606 are shown) is displayed on the dealer terminal **4** through the procedures of the above-described steps S601 through S606.

A comment input column is provided in the access history detail window. In this comment input column, the person in charge of inputting the estimated price can input a message when the estimated price is input, and the input message is sent to the customer having made the estimate request together with the estimated price. For example, if the customer cancelled any choice after a plurality of selection changes, a message that a specification corresponding to the cancelled choice is offered free is input in this comment input column. Thus, an estimated price including a preferable message can be presented to the customer, so that the customer may be easily introduced into negotiations. Accordingly, such a comment input column is particularly effective when a choice cancelled after a plurality of selection changes is displayed.

Referring to the flowchart of FIG. **32** again, in next step S559, the number of times of browsing the "purchase review information list window" (shown in FIG. **20**) by the customer within the predetermined period, the number of hours and days spent on browsing it are calculated on the basis of the access history information of the customer, and these numbers of browsing times, hours and days and a standard correction price based on them are displayed. This standard correction price is shifted in the minus direction when the number of browsing times, browsing hours or browsing days is larger than a predetermined number (which is slightly larger than the average of those of all customers) (and may be shifted in the minus direction more largely as the number of browsing times, browsing hours or browsing days is larger).

In next step S560, the numbers of times of browsing and the numbers of hours and days spent on browsing the "selected specification or configuration display window" (shown in FIG. **16**) of the customized vehicle by the customer within the predetermined period are calculated on the basis of the access history information of the customer, and the numbers of browsing times, browsing hours and days and a standard correction price based on them are displayed. This standard correction price is shifted in the minus direction when the number of browsing times, hours or days is larger than a predetermined number of times, hours or days (which are slightly larger than the average of those of all customers) (and may be more largely shifted in the minus direction as the number of browsing times, hours or days is larger).

In next step S561, the number of estimate requests regarding the customized vehicle and another customized vehicle having different specifications or configurations made by the customer of the dealer and other dealers within the predetermined period (or the number of estimate requests regarding the customized vehicle made by the customer of other dealers within the predetermined period) is calculated on the basis of the access history information of the customer, and the number of estimate requests and a standard correction price based on the number are displayed. This standard correction price is shifted in the minus direction when the number of estimate requests is larger than a predetermined number (of, for example, 10) (and may be more largely shifted in the minus direction as the number is larger).

In next step S562, the number of estimate requests regarding another customized vehicle having different specifications or configurations from the current customized vehicle made by the customer of the dealer within the predetermined period is calculated on the basis of the access history information of the customer, and the number of estimate requests and a standard correction price based on the number are displayed. This standard correction price is shifted in the minus direction when the number of estimate requests is larger than a predetermined number (of, for example, 5) (and may be more largely shifted in the minus direction as the number is larger).

In next step S563, a Web site linked to the present site and browsed by the customer before the access to the present Web site and a standard correction price based on the linked site are displayed. This standard correction price is shifted in the minus direction when the linked site is a Web site of the manufacturer.

In next step S564, the number of Web sites linked to the present site and browsed by the customer before the access to the present Web site and a standard correction price based on the number are displayed. This standard correction price is shifted in the minus direction when the number of linked Web sites is larger than a predetermined number (and may be more largely shifted in the minus direction as the number is larger).

In next step S565, the degree of purchase intention for the customized vehicle related to the estimate request of the customer is calculated on the basis of the access history information of the customer to be displayed. The degree of purchase intention is calculated, for example, by performing, on a standard price, predetermined increase correction when the customer has made an access to "ZOOM" or "image download" with respect to the customized vehicle related to the estimate request, or by performing larger increase correction as the number of estimate requests regarding the customized vehicle is larger or as the number of times of browsing the "purchase review information list window" is larger.

The number of options selected by the customer with respect to the customized vehicle and a standard correction price based on the number of selected options may be also displayed. In this case, the standard correction price is shifted in the minus direction when the number of selected options is 0 or 4 through 9 (which is because there is statistical tendency that it is difficult to enter into negotiations when the number of selected options is 1 through 3).

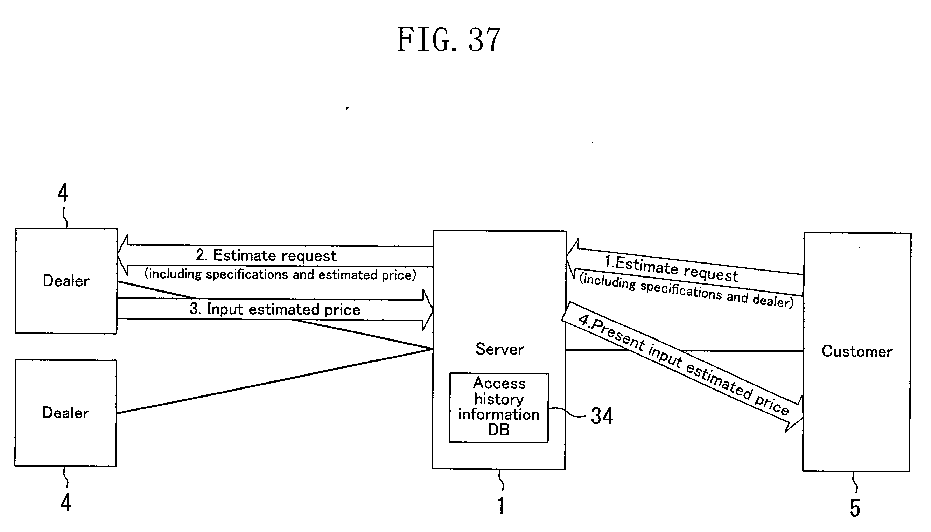

The principal points after an estimate request in this embodiment are summarized in FIG. **37**. Specifically, a customer (the user terminal **5**) makes an estimate request (including preferred specifications or configurations and a dealer (selected distributor) selected by the customer) of the manufacturer server **1**. When the manufacturer server **1** receives the estimate request, the estimate request (including the preferred specifications or configurations and the manufacturer recommended retail price) is sent to the dealer selected by the customer (the dealer terminal **4** through the dealer server **2**), so that a person in charge of the dealer can input an estimated price. When the person in charge of the dealer inputs the estimated price, the access history information (such as the specification or configuration selection history) of the customer having made the estimate request that is read from the customer DB **34** (access history information DB) and information introducible from the access history information (such as a degree of purchase intention of the customer for the customized vehicle related to the estimate request and a presumed purchase price) are displayed on the dealer terminal **4**. After the person in charge of the dealer inputs the estimated price set on the basis of the access history information and the like in the dealer terminal **4**, the input estimated price is sent through the dealer server **2** to the manufacturer server **1**. The manufacturer server **1** sends the estimated price to the customer (the user terminal **5**) having made the estimate request.

In this embodiment, the estimated price may be any of a price obtained by subtracting a discount price from the manufacturer recommended retail price, a price obtained by subtracting a discount price from a sum of the manufacturer recommended retail price and various expenses necessary for the purchase, a price obtained by subtracting an assessed price of a trade-in vehicle (determined in consideration of a discount) from the manufacturer recommended retail price, and a price obtained by subtracting an assessed price of a trade-in vehicle (determined in consideration of a discount) from a sum of the manufacturer recommended retail price and various necessary expenses.

Accordingly, when a dealer inputs an estimated price in this embodiment, access history information and the like of a customer having made an estimate request is provided to the dealer, and hence, the dealer can easily set, on the basis of the access history information and the like of the customer, an appropriate estimated price, namely, an estimated price not largely exceeding a preferred purchase price of the customer or an estimated price according to a degree of purchase intention of the customer. As a result, an opportunity of negotiations can be minimally lost against the intention of the dealer.

Although the dealer server **2** is installed in the dealer in this embodiment, if the dealer terminal **4** can make an access to the manufacturer server **1** without the dealer server **2**, the dealer server **2** can be omitted. In this case, the manufacturer server **1** executes also the estimate/assessment processing (shown in FIG. **26**) performed by the dealer server **2** in the above description (which also applies to first and second modifications described below). Thus, the manufacturer server **1** can construct a vehicle sales support apparatus for supporting vehicle sales to customers online (although the manufacturer server **1** and the dealer server **2** together construct the vehicle sales support apparatus in this embodiment).

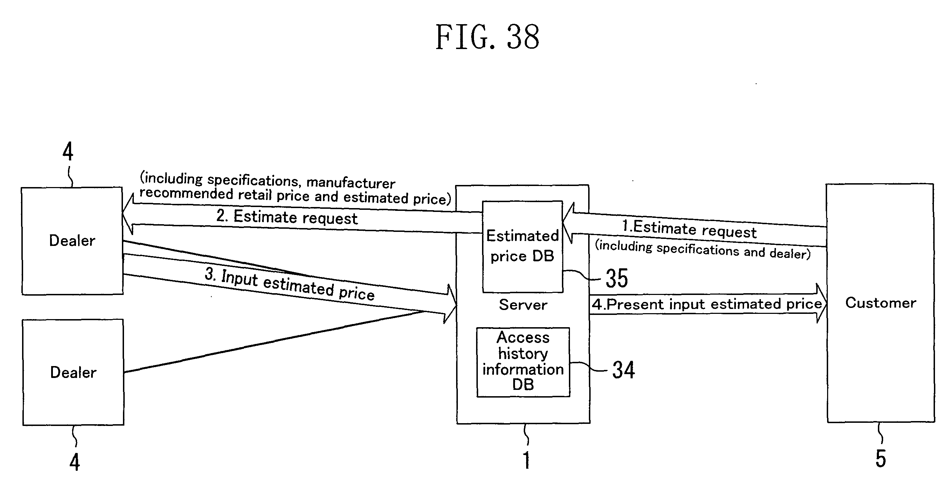

FIG. **38** shows a first modification of the embodiment. Specifically, in the first modification, a manufacturer server **1** has an estimated price DB **35** in which estimated prices of vehicles having different specifications or configurations set by each dealer are stored. When an estimate request regarding a vehicle with preferred specifications or configurations selected by a customer (namely, a customized vehicle) is received from the customer, the selected specifications or configurations, the manufacturer recommended retail price of the customized vehicle calculated based on the data store in the manufacturer recommended retail price DB **31**, and the estimated price of the customized vehicle set by a dealer selected by the customer, which is read from the estimated price DB **35**, are presented to the selected dealer (selected distributor), so that the dealer can input a new estimated price of the customized vehicle. When the dealer inputs the new estimated price, access history information and the like of the customer read from the customer DB **34** (access history information DB) and information introducible from the access history information are presented to the dealer in the same manner as in the above-described embodiment. After the dealer inputs the new estimated price (if the presented estimated price is approved, the same price is input or the approval is input), the manufacturer server **1** sends the input estimated price (if the approval is input, it is regarded that the same estimated price has been input) to the customer having made the estimate request. In the case where an estimated price is thus presented to a dealer by providing the estimated price DB **35**, the dealer can refer to the previously set estimated price stored in the estimated price DB **35** in deciding a new estimated price, and hence, an estimated price can be more easily set. In the case where the dealer inputs an estimated price different from the presented estimated price, the estimated price stored in the estimated price DB **35** may be updated to the new estimated price, but the update is performed after presenting the new estimated price to the customer.

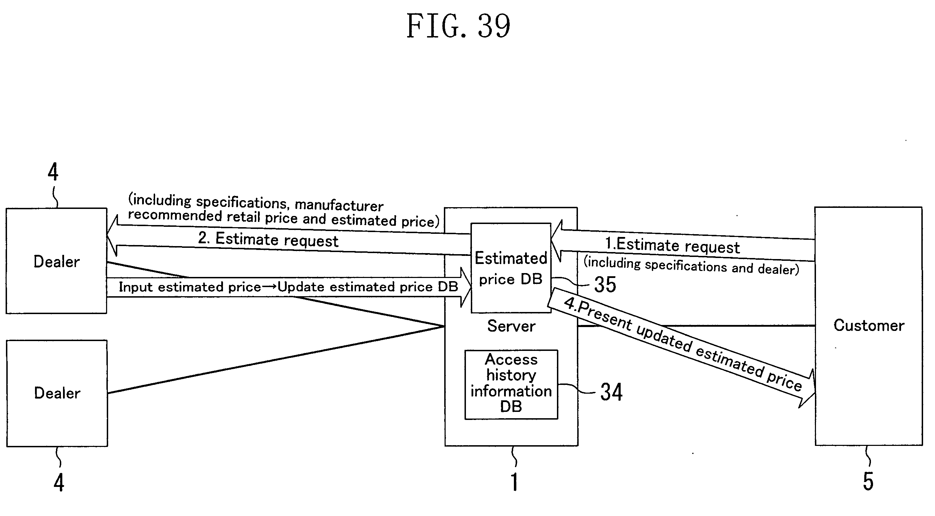

FIG. **39** shows a second modification of the above-described embodiment. In the second modification, the new estimated price input by the dealer is once stored for updating the estimated price DB **35**, and the updated estimated price is read from the estimated price DB **35** so as to be sent to the customer having made the estimate request. Specifically, in the second modification, similarly to the first modification, the manufacturer server **1** has the estimated price DB **35** in which estimated prices of vehicles having different specifications or configurations set by each dealer are stored. When an estimate request regarding a vehicle with preferred specifications or configurations selected by a customer (namely, a customized vehicle) is received from the customer, the selected specifications or configurations, the manufacturer recommended retail price of the customized vehicle, and the estimated price of the customized vehicle set by a dealer selected by the customer, which is read from the estimated price DB **35**, are presented to the selected dealer, so that the dealer can input a new estimated price of the customized vehicle. When the dealer inputs the new estimated price, the access history information and the like of the customer read from the customer DB **34** (access history information DB) and information introducible from the access history information are presented to the dealer in the same manner as in the first modification. After the dealer inputs the new estimated price (if the presented estimated price is approved, the same price is input or the approval is input), the manufacturer server **1** stores the input estimated price (if the approval is input, it is regarded that the same estimated price has been input) for updating the estimated price DB **35.** Thereafter, the manufacturer server **1** reads the updated estimated price from the estimated price DB **35** and sends it to the customer having made the estimate request. In each of the first and second modifications, the estimated price is a price obtained by subtracting a discount price from the manufacturer recommended retail price or a price obtained by subtracting a discount price from a sum of the manufacturer recommended retail price and necessary expenses.

In the above-described embodiment (including the modifications), a manufacturer does not force dealers to employ the present system but the dealers spontaneously employ the present system to their mind, and there may be some dealers for selling vehicles offline without employing the present system.

## Claims

1. A vehicle sales support system for supporting vehicle sales to customers online by allowing a customer to select, via communications lines, preferred specifications from a plurality of specifications previously set with respect to a vehicle and sending an estimated price of a selectively specified vehicle having said preferred specifications to said customer in response to an estimate request from said customer, comprising:
a manufacturer recommended retail price database for storing data for enabling calculation of manufacturer recommended retail prices of vehicles having said plurality of specifications;
an access history information database for storing access history information of accesses made online by each customer for specification selection and/or estimate request regarding the vehicle;
specification selection means for presenting said plurality of specifications of the vehicle to said customer, allowing said customer to select said preferred specifications from said plurality of specifications, calculating a manufacturer recommended retail price of said selectively specified vehicle on the basis of said data stored in said manufacturer recommended retail price database and presenting said calculated manufacturer recommended retail price to said customer;
distributor selection means for presenting a plurality of distributors to said customer and allowing said customer to select, from said plurality of distributors, a distributor by which an estimated price of said selectively specified vehicle is desired to be presented;
estimated price setting means, used when an estimate request regarding said selectively specified vehicle is received from said customer, for presenting, to said selected distributor, said preferred specifications and said manufacturer recommended retail price of said selectively specified vehicle calculated on the basis of said data stored in said manufacturer recommended retail price database, and allowing said selected distributor to input an estimated price of said selectively specified vehicle;
estimated price submit means for sending said estimated price input by said selected distributor to said customer having made said estimate request; and
access history information providing means, used when said selected distributor inputs said estimated price, for presenting, to said selected distributor, said access history information of said customer having made said estimate request read from said access history information database and/or information introducible from said access history information.

2. The vehicle sales support system of Claim 1,
wherein said access history information database stores specification selection history of each customer, and
when said selected distributor inputs said estimated price, said access history information providing means presents, to said selected distributor, said specification selection history of said customer having made said estimate request read from said access history information database.

3. The vehicle sales support system of Claim 1 or 2,
wherein said specification selection means allows, for selection of said preferred specifications, said customer to select a preferred choice from a plurality of choices set with respect to each of a plurality of items, and
when said selected distributor inputs said estimated price, said access history information providing means extracts a choice of each of said plurality of items of which selection has been cancelled by said customer as a result of a plurality of selection changes from said specification selection history of said customer having made said estimate request read from said access history information database, and presents said extracted choice to said selected distributor.

4. The vehicle sales support system of Claim 3, further comprising message input means for enabling said selected distributor to input a message when said selected distributor inputs said estimated price,
wherein when said selected distributor inputs a message, said estimated price submit means sends said message to said customer having made said estimate request in addition to said estimated price.

5. The vehicle sales support system of one of the preceding claims,
wherein said specification selection means allows, for selection of said preferred specifications, said customer to select a preferred choice from a plurality of choices set with respect to each of a plurality of items, and
when said selected distributor inputs said estimated price, said access history information providing means extracts a choice of each of said plurality of items ultimately selected by said customer as a result of a selection change from said specification selection history of said customer having made said estimate request read from said access history information database, and presents said extracted choice to said selected distributor.

6. The vehicle sales support system of one of the preceding claims,
wherein said specification selection means allows, for selection of said preferred specifications, said customer to select a preferred choice from a plurality of choices set with respect to each of a plurality of items, and
when said selected distributor inputs said estimated price, said access history information providing means extracts a choice of each of said plurality of items on selection of which said customer has spent time longer than a given time from said specification selection history of said customer having made said estimate request read from said access history information database, and presents said extracted choice to said selected distributor.

7. The vehicle sales support system of one of the preceding claims,
wherein said specification selection means allows, for selection of said preferred specifications, said customer to select a preferred choice from a plurality of choices set with respect to each of a plurality of items, and
when said selected distributor inputs said estimated price, said access history information providing means calculates, on the basis of said specification selection history of said customer having made said estimate request read from said access history information database, a number of times of selecting said preferred choice selected in each of said plurality of items by said customer during all specification selection made by said customer, and presents, to said selected distributor, said number of times of selecting said preferred choice.

8. The vehicle sales support system of one of the preceding claims,
wherein when said selected distributor inputs said estimated price, said access history information providing means calculates a degree of purchase intention of said customer having made said estimate request for said selectively specified vehicle related to said estimate request on the basis of said access history information of said customer read from said access history information database, and presents said degree of purchase intention to said selected distributor.

9. The vehicle sales support system of one of the preceding claims,
wherein when said selected distributor inputs said estimated price, said access history information providing means calculates, on the basis of said access history information of said customer having made said estimate request read from said access history information database, a number of estimate requests made by said customer within a given period, and presents said number of estimate requests to said selected distributor.

10. The vehicle sales support system of one of the preceding claims,
wherein said access history information database stores specification selection history of each customer, and
when said selected distributor inputs said estimated price, said access history information providing means calculates, on the basis of said specification selection history of said customer having made said estimate request read from said access history information database, a presumed purchase price at which said customer is presumed to purchase said selectively specified vehicle related to said estimate request, and presents said presumed purchase price to said selected distributor.

11. The vehicle sales support system of one of the preceding claims,
wherein said access history information database stores manufacturer recommended retail prices of all selectively specified vehicles selected by and having been presented to each customer by said specification selection means with the order of presentation discriminable, and
when said selected distributor inputs said estimated price, said access history information providing means presents, to said selected distributor, said manufacturer recommended retail prices of all the selectively specified vehicles presented to said customer having made said estimate request read from said access history information database with the order of presentation discriminable.

12. The vehicle sales support system of one of the preceding claims, further comprising an estimated price database for storing estimated prices of vehicles having said plurality of specifications set by each of said plurality of distributors,
wherein when said estimate request for said selectively specified vehicle selected by said customer is received from said customer, said estimated price setting means presents, to said selected distributor, said preferred specifications, said manufacturer recommended retail price of said selectively specified vehicle and an estimated price of said selectively specified vehicle, set by said selected distributor, read from said estimated price database.

13. The vehicle sales support system of one of the preceding claims,
wherein said specification selection means presents, to said customer, in addition to said manufacturer recommended retail price of said selectively specified vehicle selected by said customer, an image, for enlarged display or download, of said selectively specified vehicle, and
when said selected distributor inputs said estimated price, said access history information providing means retrieves, from said access history information of said customer having made said estimate request read from said access history information database, the presence or absence of the enlarged display or download of said image of said selectively specified vehicle related to said estimate request, and presents, to said selected distributor, the presence or absence of the enlarged display or download.

14. The vehicle sales support system of one of the preceding claims, further comprising list display window submit means for sending, in response to a request from said customer to which said estimated price has been sent, a list display window for displaying a list of estimated prices of all selectively specified vehicles selected by said customer, and
when said selected distributor inputs said estimated price, said access history information providing means calculates, on the basis of said access history information of said customer having made said estimate request read from said access history information database, a number of times of browsing said list display window by said customer within a given period, and presents said number of browsing times to said selected distributor.

15. A vehicle sales support program for controlling a vehicle sales support apparatus for supporting vehicle sales to customers online by allowing a customer to select, via communications lines, preferred specifications from a plurality of specifications previously set with respect to a vehicle and sending an estimated price of a selectively specified vehicle having said preferred specifications to said customer in response to an estimate request from said customer,
said vehicle sales support apparatus including:
a manufacturer recommended retail price database for storing data for enabling calculation of manufacturer recommended retail prices of vehicles having said plurality of specifications; and
an access history information database for storing access history information of accesses made online by each customer for specification selection and/or estimate request regarding the vehicle,
said vehicle sales support program making said vehicle sales support apparatus execute:
a specification selection processing for presenting said plurality of specifications of the vehicle to said customer, allowing said customer to select said preferred specifications from said plurality of specifications, calculating a manufacturer recommended retail price of said selectively specified vehicle on the basis of said data stored in said manufacturer recommended retail price database and presenting said calculated manufacturer recommended retail price to said customer;
a distributor selection processing for presenting a plurality of distributors to said customer and allowing said customer to select, from said plurality of distributors, a distributor by which an estimated price of said selectively specified vehicle is desired to be presented;
an estimated price setting processing, performed when an estimate request regarding said selectively specified vehicle is received from said customer, for presenting, to said selected distributor, said preferred specifications and said manufacturer recommended retail price of said selectively specified vehicle calculated on the basis of said data stored in said manufacturer recommended retail price database, and allowing said selected distributor to input an estimated price of said selectively specified vehicle;
an estimated price submit processing for sending said estimated price input by said selected distributor to said customer having made said estimate request; and
an access history information providing processing, performed when said selected distributor inputs said estimated price, for presenting, to said selected distributor, said access history information of said customer having made said estimate request read from said access history information database and/or information introducible from said access history information.

16. The vehicle sales support program of Claim 15,
wherein said access history information database stores specification selection history of each customer, and
in said access history information providing processing, when said selected distributor inputs said estimated price, said specification selection history of said customer having made said estimate request read from said access history information database is presented to said selected distributor.

17. The vehicle sales support program of Claim 15 or 16,
wherein in said specification selection processing, said customer is allowed, for selection of said preferred specifications, to select a preferred choice from a plurality of choices set with respect to each of a plurality of items, and
in said access history information providing processing, when said selected distributor inputs said estimated price, a choice of each of said plurality of items of which selection has been cancelled by said customer as a result of a plurality of selection changes is extracted from said specification selection history of said customer having made said estimate request read from said access history information database, and said extracted choice is presented to said selected distributor.

18. The vehicle sales support program of Claim 15, 16 or 17,
wherein in said specification selection processing, said customer is allowed, for selection of said preferred specifications, to select a preferred choice from a plurality of choices set with respect to each of a plurality of items, and
in said access history information providing processing, when said selected distributor inputs said estimated price, a choice of each of said plurality of items ultimately selected by said customer as a result of a selection change is extracted from said specification selection history of said customer having made said estimate request read from said access history information database, and said extracted choice is presented to said selected distributor.

19. The vehicle sales support program of one of the preceding claims 15 to 18,
wherein in said specification selection processing, said customer is allowed, for selection of said preferred specifications, to select a preferred choice from a plurality of choices set with respect to each of a plurality of items, and
in said access history information providing processing, when said selected distributor inputs said estimated price, a choice of each of said plurality of items on selection of which said customer has spent time longer than a given time is extracted from said specification selection history of said customer having made said estimate request read from said access history information database, and said extracted choice is presented to said selected distributor.

20. The vehicle sales support program of one of the preceding claims 15 to 19,
wherein in said specification selection processing, said customer is allowed, for selection of said preferred specifications, to select a preferred choice from a plurality of choices set with respect to each of a plurality of items, and
in said access history information providing processing, when said selected distributor inputs said estimated price, a number of times of selecting said preferred choice selected in each of said plurality of items by said customer during all specification selections made by said customer is calculated on the basis of said specification selection history of said customer having made said estimate request read from said access history information database, and said number of times of selecting said preferred choice is presented to said selected distributor.

21. The vehicle sales support program of one of the preceding claims 15 to 20,
wherein in said access history information providing processing, when said selected distributor inputs said estimated price, a degree of purchase intention of said customer having made said estimate request for said selectively specified vehicle related to said estimate request is calculated on the basis of said access history information of said customer read from said access history information database, and said degree of purchase intention is presented to said selected distributor.

22. The vehicle sales support program of one of the preceding claims 15 to 21,
wherein in said access history information providing processing, when said selected distributor inputs said estimated price, a number of estimate requests made by said customer within a given period is calculated on the basis of said access history information of said customer having made said estimate request read from said access history information database, and said number of estimate requests is presented to said selected distributor.

23. The vehicle sales support program of one of the preceding claims 15 to 22,
wherein said access history information database stores specification selection history of each customer, and
in said access history information providing processing, when said selected distributor inputs said estimated price, a presumed purchase price at which said customer is presumed to purchase said selectively specified vehicle related to said estimate request is calculated on the basis of said specification selection history of said customer having made said estimate request read from said access history information database, and said presumed purchase price is presented to said selected distributor.

24. The vehicle sales support program of one of the preceding claims 15 to 23,
wherein said access history information database stores manufacturer recommended retail prices of all selectively specified vehicles selected by and having been presented to each customer by said specification selection processing with the order of presentation discriminable, and
in said access history information providing processing, when said selected distributor inputs said estimated price, said manufacturer recommended retail prices of all the selectively specified vehicles presented to said customer having made said estimate request read from said access history information database are presented to said selected distributor with the order of presentation discriminable.

25. The vehicle sales support program of one of the preceding claims 15 to 24, further comprising an estimated price database for storing estimated prices of vehicles having said plurality of specifications set by each of said plurality of distributors,
wherein in said estimated price setting processing, when said estimate request for said selectively specified vehicle selected by said customer is received from said customer, said preferred specifications, said manufacturer recommended retail price of said selectively specified vehicle and an estimated price of said selectively specified vehicle, set by said selected distributor, read from said estimated price database are presented to said selected distributor.

26. The vehicle sales support program of one of the preceding claims 15 to 25,
wherein in said specification selection processing, in addition to said manufacturer recommended retail price of said selectively specified vehicle selected by said customer, an image, for enlarged display or download, of said selectively specified vehicle is presented to said customer, and
in said access history information providing processing, when said selected distributor inputs said estimated price, the presence or absence of the enlarged display or download of said image of said selectively specified vehicle related to said estimate request is retrieved from said access history information of said customer having made said estimate request read from said access history information database, and the presence or absence of the enlarged display or download is presented to the selected distributor.

27. The vehicle sales support program of one of the preceding claims 15 to 26,
wherein said vehicle sales support apparatus is made to further execute a list display window submit processing for sending, in response to a request from said customer to which said estimated price has been sent, a list display window for displaying a list of estimated prices of all selectively specified vehicles selected by said customer, and
in said access history information providing processing, when said selected distributor inputs said estimated price, a number of times of browsing said list display window by said customer within a given period is calculated on the basis of said access history information of said customer having made said estimate request read from said access history information database, and said number of browsing times is presented to said selected distributor.

28. A vehicle sales support method for supporting vehicle sales to customers online by allowing a customer to select, via communications lines, preferred specifications from a plurality of specifications previously set with respect to a vehicle and sending an estimated price of a selectively specified vehicle having said preferred specifications to said customer in response to an estimate request from said customer,
a manufacturer recommended retail price database for storing data for enabling calculation of manufacturer recommended retail prices of vehicles having said plurality of specifications, and an access history information database for storing access history information of accesses made online by each customer for specification selection and/or estimate request regarding the vehicle being previously prepared, said method comprising:
a specification selection step of presenting said plurality of specifications of the vehicle to said customer, allowing said customer to select said preferred specifications from said plurality of specifications, calculating a manufacturer recommended retail price of said selectively specified vehicle on the basis of said-data stored in said manufacturer recommended retail price database and presenting said calculated manufacturer recommended retail price to said customer;
a distributor selection step of presenting a plurality of distributors to said customer and allowing said customer to select, from said plurality of distributors, a distributor by which an estimated price of said selectively specified vehicle is desired to be presented;
an estimated price setting step, performed when an estimate request regarding said selectively specified vehicle is received from said customer, of presenting, to said selected distributor, said preferred specifications and said manufacturer recommended retail price of said selectively specified vehicle calculated on the basis of said data stored in said manufacturer recommended retail price database, and allowing said selected distributor to input an estimated price of said selectively specified vehicle;
an estimated price submit step of sending said estimated price input by said selected distributor to said customer having made said estimate request; and
an access history information providing step, performed when said selected distributor inputs said estimated price, of presenting, to said selected distributor, said access history information of said customer having made said estimate request read from said access history information database and/or information introducible from said access history information.

29. The vehicle sales support method of Claim 28,
wherein said access history information database stores specification selection history of each customer, and
in said access history information providing step, when said selected distributor inputs said estimated price, said specification selection history of said customer having made said estimate request read from said access history information database is presented to said selected distributor.

30. The vehicle sales support method of Claim 28 or 29,
wherein in said specification selection step, said customer is allowed, for selection of said preferred specification, to select a preferred choice from a plurality of choices set with respect to each of a plurality of items, and
in said access history information providing step, when said selected distributor inputs said estimated price, a choice of each of said plurality of items of which selection has been cancelled by said customer as a result of a plurality of selection changes is extracted from said specification selection history of said customer having made said estimate request read from said access history information database, and said extracted choice is presented to said selected distributor.

31. The vehicle sales support method of Claim 28, 29 or 30,
wherein in said specification selection step, said customer is allowed, for selection of said preferred specifications, to select a preferred choice from a plurality of choices set with respect to each of a plurality of items, and
in said access history information providing step, when said selected distributor inputs said estimated price, a choice of each of said plurality of items ultimately selected by said customer as a result of a selection change is extracted from said specification selection history of said customer having made said estimate request read from said access history information database, and said extracted choice is presented to said selected distributor.

32. The vehicle sales support method of one of the preceding claims 28 to 31,
wherein in said specification selection step, said customer is allowed, for selection of said preferred specifications, to select a preferred choice from a plurality of choices set with respect to each of a plurality of items, and
in said access history information providing step, when said selected distributor inputs said estimated price, a choice of each of said plurality of items on selection of which said customer has spent time longer than a given time is extracted from said specification selection history of said customer having made said estimate request read from said access history information database, and said extracted choice is presented to said selected distributor.

33. The vehicle sales support method of one of the preceding claims 28 to 32,
wherein in said specification selection step, said customer is allowed, in selection of said preferred specification, to select a preferred choice from a plurality of choices set with respect to each of a plurality of items, and
in said access history information providing step, when said selected distributor inputs said estimated price, a number of times of selecting said preferred choice selected in each of said plurality of items by said customer during all specification selections made by said customer is calculated on the basis of said specification selection history of said customer having made said estimate request read from said access history information database, and said number of times of selecting said preferred choice is presented to said selected distributor.

34. The vehicle sales support method of one of the preceding claims 28 to 33,
wherein in said access history information providing step, when said selected distributor inputs said estimated price, a degree of purchase intention of said customer having made said estimate request for said selectively specified vehicle related to said estimate request is calculated on the basis of said access history information of said customer read from said access history information database, and said degree of purchase intention is presented to said selected distributor.

35. The vehicle sales support method of one of the preceding claims 28 to 34,
wherein in said access history information providing step, when said selected distributor inputs said estimated price, a number of estimate requests made by said customer within a given period is calculated on the basis of said access history information of said customer having made said estimate request read from said access history information database, and said number of estimate requests is presented to said selected distributor.

36. The vehicle sales support method of one of the preceding claims 28 to 35,
wherein said access history information database stores specification selection history of each customer, and
in said access history information providing step, when said selected distributor inputs said estimated price, a presumed purchase price at which said customer is presumed to purchase said selectively specified vehicle related to said estimate request is calculated on the basis of said specification selection history of said customer having made said estimate request read from said access history information database, and said presumed purchase price is presented to said selected distributor.

37. The vehicle sales support method of one of the preceding claims 28 to 36,
wherein said access history information database stores manufacturer recommended retail prices of all selectively specified vehicles selected by and having been presented to each customer in said specification selection step with the order of presentation discriminable, and
in said access history information providing step, when said selected distributor inputs said estimated price, said manufacturer recommended retail prices of all the selectively specified vehicles presented to said customer having made said estimate request read from said access history information database are presented to said selected distributor with the order of presentation discriminable.

38. The vehicle sales support method of one of the preceding claims 28 to 37,
wherein an estimated price database for storing estimated prices of vehicles having said plurality of specifications set by each of said plurality of distributors is previous prepared in addition to said manufacturer recommended retail price database and said access history information database, and
in said estimated price setting step, when said estimate request for said selectively specified vehicle selected by said customer is received from said customer, said preferred specifications, said manufacturer recommended retail price of said selectively specified vehicle and an estimated price of said selectively specified vehicle, set by said selected distributor, read from said estimated price database are presented to said selected distributor.

39. The vehicle sales support method of one of the preceding claims 28 to 38,
wherein in said specification selection step, in addition to said manufacturer recommended retail price of said selectively specified vehicle selected by said customer, an image, for enlarged display or download, of said selectively specified vehicle is presented to said customer, and
in said access history information providing step, when said selected distributor inputs said estimated price, the presence or absence of the enlarged display or download of said image of said selectively specified vehicle related to said estimate request is retrieved from said access history information of said customer having made said estimate request read from said access history information database, and the presence or absence of the enlarged display or download is presented to the selected distributor.

40. The vehicle sales support method of one of the preceding claims 28 to 39, further comprising a list display window submit step of sending, in response to a request from said customer to which said estimated price has been sent, a list display window for displaying a list of estimated prices of all selectively specified vehicles selected by said customer,
wherein in said access history information providing step, when said selected distributor inputs said estimated price, a number of times of browsing said list display window by said customer within a given period is calculated on the basis of said access history information of said customer having made said estimate request read from said access history information database, and said number of browsing times is presented to said selected distributor.
